(19) **Europäisches Patentamt / European Patent Office / Office européen des brevets**

(11) **EP 1 470 967 B1**

(12) **EUROPEAN PATENT SPECIFICATION**

(45) Date of publication and mention
of the grant of the patent:
**23.02.2011 Bulletin 2011/08**

(21) Application number: **03734853.9**

(22) Date of filing: **27.01.2003**

(51) Int Cl.:
**B60R 21/00** (2006.01)    **G08G 1/16** (2006.01)

(86) International application number:
**PCT/JP2003/000755**

(87) International publication number:
**WO 2003/064215 (07.08.2003 Gazette 2003/32)**

(54) **OBSTACLE DETECTING/ALARMING SYSTEM FOR VEHICLE**

HINDERNISERFASSUNGS-/-WARNSYSTEM FÜR FAHRZEUG

SYSTEME D'ALARME ET DE DETECTION D'OBSTACLES POUR VEHICULE

(84) Designated Contracting States:
**DE FR GB IT**

(30) Priority: **28.01.2002 JP 2002019243**

(43) Date of publication of application:
**27.10.2004 Bulletin 2004/44**

(73) Proprietor: **Panasonic Electric Works Co., Ltd.**
**Kadoma-shi**
**Osaka (JP)**

(72) Inventors:
• **NAKAZONO, Masahiro**
**Kadoma-shi, Osaka 571-8686 (JP)**
• **NAKAGAWA, Yuji**
**Kadoma-shi, Osaka 571-8686 (JP)**

• **AZUMA, Naoya**
**Kadoma-shi, Osaka 571-8686 (JP)**
• **YAMAUCHI, Kazumasa**
**Kadoma-shi, Osaka 571-8686 (JP)**

(74) Representative: **Appelt, Christian W.**
**Forrester & Boehmert**
**Pettenkoferstrasse 20-22**
**80336 München (DE)**

(56) References cited:
| | |
|---|---|
| JP-A- 5 266 400 | JP-A- 8 280 006 |
| JP-A- 2000 339 595 | JP-A- 2001 283 389 |
| JP-A- 2002 240 662 | US-A- 5 479 173 |
| US-A- 5 684 473 | US-A- 5 936 549 |

**Description**

TECHNICAL FIELD

The present invention relates to an obstacle detecting and alarming system for a vehicle, which detects obstacles around the vehicle and informs a driver about the approach of the detected obstacles, to prevent collisions. More particularly, it relates to an obstacle detecting and alarming system for a vehicle which is suitable to detect obstacles when the vehicle runs at low speed under conditions where the obstacles exist near the vehicle, like movement in a narrow parking lot.

BACKGROUND ART

Generally, an alarm system for a vehicle to prevent collisions with obstacles measures propagation time from sending a sound wave or light to receiving a reflected wave, to calculate a distance from the vehicle to the nearest obstacle. And then the alarm system issues an alarm, for example, from a buzzer, whose sound interval is getting shorter according to the distance. Or the system issues an alarm from a light emitting element (e.g., LED (light-emitting diode)), whose color or a blink-period is designed to vary with the distance.

Japanese Non-examined Patent Publication No.5-266400 discloses a conventional obstacle detecting and alarming system for a vehicle. The system monitors a steering angle, and calculates a predetermined angle range, i.e., an intended traveling range where the vehicle will pass, and detects obstacles within the angle range. Also, Japanese Non-examined Patent Publication No.2000-339595 and No.2001-283389 disclose the same system. In such systems, the alarm is issued based on the distance between the vehicle and the nearest obstacle, so, even if it is a condition where there is no possibility that the vehicle may collide with the obstacle, e.g., a condition where the vehicle runs in parallel to a wall, the alarm must be issued if the distance between the vehicle and the obstacle is less than a predetermined reference value. Moreover, it is difficult for the driver to judge whether the obstacle is avoidable or not if the obstacle exists in a driver's blind spot. So, there is a problem that the driver has to get off the vehicle to check the position of the obstacle or the driver has to turn the steering wheel many times US patent 5 479 173 discloses an obstacle detecting and alarming system for a vehicle that allows to identify obstacles in an expected travel path of the vehicle based on a steering angle, a yaw rate and the velocity of the vehicle. This document corresponds to the preamble of claim 1.

DISCLOSURE OF THE INVENTION

The invention is defined by an obstacle detecting and alarming system according to claim 1, claims 2 to 25 refer to specifically advantageous realizations of a system according to claim 1".

In view of the above insufficiency, the present invention has been achieved to provide an obstacle detecting and alarming system for a vehicle which can issue an alarm message with high precision according to real condition.

The obstacle detecting and alarming system for a vehicle of this invention includes at least one obstacle sensor adapted to be located at a front or rear end of the vehicle, a direction detector which detects a running direction of the vehicle, a steering detector which monitors a steering angle of the vehicle, and an alarm means which issues an alarm message informing an expected influence of the detected obstacle on the vehicle. The obstacle sensor has a detection area of limited detection angle within which an obstacle adjacent the vehicle can be detected, and the obstacle sensor provides at least distance data indicative of a distance to the detected obstacle. The system also includes a judgment criterion generating means and a collision-evaluating means. The judgment criterion generating means analyzes the running direction and the steering angle to determine an intended traveling path followed by the vehicle and to provide a judgment criterion specific to the determined traveling path and varying with varying steering angle. The collision-evaluating means generates a collision-expected signal when the distance data satisfy the judgment criterion within the detection area, and generates a collision-avoidable signal when the distance data does not satisfy the judgment criterion within the detection area. These collision-expected signal and the collision-avoidable signal are sent to the alarm means, and the alarm message indicative of a collision-expected condition and a collision-avoidable condition respectively is issued. As mentioned above, the system of this invention can provide the judgment criterion which varies according to the steering angle. In other words, the system of this invention can change a condition that the obstacle sensor should detect an obstacle according to the intended traveling path followed by the vehicle. Consequently, the system can detect only obstacles near to the real traveling path of the vehicle, and can judge correctly whether the collision will occur or not if the steering angle is kept as it is, and then, the system can give a useful alarm message to the driver.

Preferably, the obstacle sensor is configured as a two-dimensional sensor which gives an output indicative of a direction to the detected obstacle as well as the distance. In this case, the judgment criterion generating means provides the judgment criterion which is defined by a set of first coordinate values in a two-dimensional coordinate plane extending generally horizontally around the vehicle. The first coordinate values varies in accordance with the steering angles, to trace, within the two-dimensional coordinate plane, at least one judgment line which runs generally parallel to and spaced by a predetermined margin from the intended traveling path. The collision-evaluating means generates the collision-expected signal when a positional data from the obstacle sensor is inside the judgment line within the detection area, and generates the collision-avoidable signal when the positional data is outside the judgment line within the detection area. Consequently, the system of this invention can evaluate a gravity of the detected obstacle by using the positional data of the detected obstacle and referring to the judgment line which is provided according to the intended traveling path, so that a more correct judgment can be made.

Furthermore, it is desirable that a plurality of the obstacle sensors are used and spaced along a width of the vehicle. In this case, the judgment criterion generating means provides the judgment line which intersects with the detection area defined at least one of the obstacle sensors, and the collision-evaluating means generates the collision-expected signal when the positional data from any one of the obstacle sensors is inside the judgment line and within the detection area of the corresponding obstacle sensor, and generates the collision-avoidable signal when the positional data from any one of the obstacle sensors is outside the judgment line and within the detection area of the corresponding obstacle sensor. By using the plural obstacle sensors as mentioned above, the collision judgment can be made correctly over a wide range with respect to the vehicle's width.

The judgment criterion generating means may provide a pair of the judgment lines running on both sides of the vehicle when the steering angle is within a small angle indicative of that the vehicle is running straight. Consequently, it can be made certainly to detect the obstacle on both sides of the vehicle when the vehicle is running straight.

Furthermore, the judgment criterion generating means may provide a pair of the judgment lines, one extends outside of the turn and the other extends inside of the turn when the steering angle exceeds a predetermined large angle indicative of that the vehicle is turning. Consequently, the alarm message informing a danger of the collision on each side of the turn (i.e., the inside and the outside of the turn) can be issued, furthermore, in the inside of the turn, a possibility of the collision can be judged with consideration of a difference of the traveling path between a front wheel and a rear wheel.

It is desirable that the obstacle sensors are disposed symmetrically with respect to a center longitudinal axis of said vehicle. Consequently, the collision judgment, which is made when the vehicle turns both right and left, can be made by a similar operation.

It is desirable that four obstacle sensors are disposed at the front end or the rear end of the vehicle with two of the obstacle sensors located at the width end corners, respectively. Consequently, the detection area in the forward and backward direction of the vehicle can be covered widely, and the collision judgment can be made correctly.

Furthermore, in order to judge the possibility of the collision more correctly at a corner part of the vehicle, it is desirable that the collision-evaluating means analyzes time series data of the positional data from each one of the obstacle sensors located at the width end corners. In this case, the collision-evaluating means analyzes the time series data of the positional data to determine whether or not the obstacle is approaching the vehicle relatively toward the vehicle from point to point outside the judgment line, and generates the collision-expected signal when the obstacle is determined to be so approaching. Consequently, when the steering angle is close to the maximum, a possibility that some distant obstacle may come up to the vehicle suddenly and collide with the vehicle can be judged at an early stage.

Furthermore, it is preferable to provide for a case where the angle data of the obstacle becomes impossible to obtain. For this purpose, the collision-evaluating means determines an angle-detection failure condition when the positional data is accompanied only with a distance data and not with an angle data, and generates the collision-expected signal when the distance data is shorter than a predetermined threshold distance upon determination of the angle-detection failure condition. In this case, the threshold distance of different values are assigned to each different obstacle sensor respectively in a predetermined pattern determined by the steering angle. Consequently, even if the angle data becomes impossible to obtain, the collision judgment can be made appropriately according to the intended traveling path of the vehicle.

Still furthermore, it is preferable that the collision judgment can be made correctly, even if the angle data from the obstacle sensor becomes indefinite. For this purpose, the collision-evaluating means analyzes time series data of the positional data from the obstacle sensors and determines an angle-indefinite condition when the time series data show that a variation in the detected angle exceeds a predetermined value. Then the collision-evaluating means derives the distance data from the obstacle sensor causing the angle-indefinite condition, and generates the collision-expected signal when the distance data is shorter than a predetermined threshold distance. In this case, too, it is desirable that the threshold distance of different values are assigned to each different obstacle sensor respectively in a predetermined pattern determined by the steering angle.

In relation to the contents above, the collision-evaluating means can generate the collision-avoidable signal when the distance data exceeds the threshold distance within a radius defining any one of the detection area.

Furthermore, the present invention can raise safety by using a more stringent criterion after a dangerous situation, where the collision-expected signal is generated, is recognized once. For this purpose, the judgment criterion generating means gives a number of stringent coordinate values that trace a stringent judgment line running generally parallel to said judgment line and spaced outwardly thereof with respect to the vehicle. And the collision-evaluating means generates the collision-expected signal when the positional data from any one of said obstacle sensors is inside of the stringent judgment line once after the collision-expected signal is generated with reference to the judgment line.

Furthermore, a function, which makes it possible for the driver to pull the vehicle to the obstacle closer without being affected by the alarm message, can be added. In this case, each of the obstacle sensors defines a short-distance range and a long-distance range within an effective detection area given to the obstacle sensor. The collision-evaluating means determines a near-obstacle condition when the positional data from any one of the obstacle sensors comes within the short-distance range, and allows the alarm means to issue the alarm message only upon acknowledgement of the near-obstacle condition.

Furthermore, in a case where this system is applied to the rear end of the vehicle and the collision judgment is made when the vehicle moves backward, at least one obstacle sensor is disposed at the rear end of the vehicle, and two additional obstacle sensors are located respectively at the front end corners of the vehicle. In this case, the judgment criterion generating means provides a set of additional coordinate values that vary in accordance with the steering angle to trace, within the two-dimensional coordinate plane, an additional judgment line which runs outside of a traveling path that the front end corner of the vehicle traces in its reverse movement. And the collision-evaluating means, upon acknowledging from the output of the direction detector that the vehicle is backing, generates the collision-expected signal when the positional data from any one of the additional obstacle sensors is inside of the additional judgment line within the corresponding detection area, and generates the collision-avoidable signal when the positional data from each of the additional obstacle sensors is outside of the additional judgment line and at the same time when the positional data from any one of the additional obstacle sensors is within the detection area given to the associated additional obstacle sensor. Consequently, any obstacle in the backward direction can be detected certainly, and it can be prevented certainly that the front end of the vehicle, which swells unexpectedly when the vehicle turns backward, collides with an obstacle.

Furthermore, in order to make the collision judgment more correctly, it is also possible to verify a current judgment result, with reference to previous judgment results and the distance data associated with the judgment results. In this case, the collision-evaluating means generates a non-detection signal when said positional data of the obstacle is outside of said detection area, and the collision-evaluating means has a memory for storing a limited number of time series data of previous and current judgment results concerning the collision-expected signal, the collision-avoidable signal, and the non-detection signal, as well as for storing a limited number of time series of previous and current distance data respectively associated with the judgment results. The collision-evaluating means analyzes the current judgment result with reference to the previous judgment results and the distance data in order to give different modes for validating or correcting the current judgment result and updating the current judgment result as validated one and storing it into the memory,

the different modes including:

a first mode; for validating said current judgment result as a correct one when the current judgment result is identical to all the previous judgment results stored in said memory;
a second mode; for correcting the current judgment result to the collision-expected signal when all the following conditions are met

1) the current judgment result is the non-detection signal,
2) judgment results of the same signal do not continue a first predetermined count,
3) the distance data less than or equal to a first predetermined distance occur consecutively a second count; and
4) the current distance data is shorter than a second predetermined distance;

a third mode; for correcting the current judgment result to the collision-avoidable signal when all the following conditions are met:

1) the current judgment result is the non-detection signal,
2) judgment results of the same signal do not continue the first predetermined count,
3) the distance data less than or equal to the first predetermined distance occur consecutively the second count, and
4) the current distance data is longer than the second predetermined distance;

a fourth mode; for validating the current judgment result as the non-detection signal when all the following conditions are met

1) the current judgment result is the non-detection signal,
2) judgment results of the same signal do not continue a first predetermined count, and
3) the distance data less than or equal to the first predetermined distance do not occur consecutively the second count;

a fifth mode; for validating the current judgment result as correct one when all the following conditions are met

1) the current judgment result is not the non-detection signal, and
2) all the stored judgment results are not identical to one another.

Still furthermore, in order to make the driver check a steering direction which makes it possible to avoid the collision, and prevent the collision certainly, this invention may include a visual indication for notifying the steering direction for avoiding the collision when the collision-avoidable signal is issued from the collision-evaluating means.

In relation to the contents above, this invention can warn the driver not to loose the steering angle, to maintain the collision-avoidable condition. In this purpose, the alarm means provides a visual indication for notifying a recommended minimum steering angle with which the vehicle can avoid the collision with the detected object when the collision-avoidable signal is issued from the collision-evaluating means.

Still furthermore, in order to make the driver confirm that the system is working effectively, this invention can inform the driver that a condition has been changed from a condition where no obstacle exists nearby to a condition where some obstacle exists nearby, by audible information. That is, the collision-evaluation means generates a start signal when the positional data from any one of the obstacle sensors comes first within a predetermined distance from the vehicle, and the alarm means provides audible information in response to the start signal, notifying that the system becomes ready for providing the alarm message.

In addition, other embodiments of the present invention discloses a method to make the collision judgment correctly even if an obstacle sensor which can detect only distance is used. In this case, the judgment criterion generating means provides a set of coordinate values in a two-dimensional coordinate plane extending generally horizontally around said vehicle. The coordinate values varies in accordance with the steering angles to trace, within the two-dimensional coordinate plane, at least one judgment line which runs generally parallel to and spaced by a predetermined margin from the traveling path. The judgment criterion generating means provides the judgment criterion as including a first radius defining the detection area and a second radius defining a detection range that touches the judgment line within the at least one detection area. And the collision-evaluating means generates the collision-expected signal when the distance data from at least one obstacle sensor is within the second radius, and generates the collision-expected signal when the distance data from at least one obstacle sensor exceeds the second radius but within the first radius. Consequently, even if the sensor outputs only the distance data, the detection area of the second radius, which is obtained from the judgment line varying according to the steering angle, can be set, and the collision judgment according to the turning angle of the vehicle can be made effectually.

In this case, too, it is preferable to use a plurality of the obstacle sensors, and correspondingly, the judgment criterion generating means provides the judgment line which intersects the detection area defined by at least one of the obstacle sensors. The collision-evaluating means generates the collision-expected signal when the distance data from the at least one obstacle sensor is within the second radius, and generates the collision-avoidable signal when the distance data from every obstacle sensor exceeds the second radius and at the same time the distance data from any one of the obstacle sensors is within the first radius.

In a case where a plurality of the obstacle sensors, which output only the distance data, are used, the judgment line which changes according to the steering angle may not intersect the detection area of one or more of obstacle sensors. In this case, for the detection area belonging to one or more of the obstacle sensors that the judgment line does not intersect, the second radius is set equal to the first radius. Consequently, if an obstacle is detected in this detection area inside the judgment line, the collision-expected signal must be generated, thus, the collision judgment can be made certainly in the Inside of the turn.

In this embodiment, the collision-evaluating means may generate the collision-expected signal when the distance data detected by one of the obstacle sensors adjacent to the inside of the turn is less than a predetermined distance. So, in the inside of the turn, the collision judgment can be made with consideration of a difference of traveling path between a front wheel and a rear wheel.

Furthermore, In this invention, the data from the obstacle sensor located nearest to the inside of the turn is examined firstly, and successively the data from the obstacle sensor located nearer to the outside of turn of the vehicle is examined. Consequently, a danger of an obstacle which exists in the inside of the turn, i.e., a driver's blind spot, can be informed at an early stage.

These and still other objects and advantageous features of the present invention will become more apparent from the following detailed description of the embodiments when taken in conjunction with the attached drawings. It is also a criterion of the present invention to combine a feature peculiar to each embodiment with a feature peculiar to other embodiments appropriately.

BRIEF DESCRIPTION OF THE DRAWINGS

FIG.1 is a schematic view of an obstacle detecting and alarming system for a vehicle in accordance with a first embodiment of the present invention.

FIG.2 is a block circuit diagram of the above system.

FIG.3 is a perspective view showing installation positions of obstacle sensors used in the above system on the vehicle.

FIG. 4 is an explanatory diagram showing a coordinate conversion from polar coordinates to X-Y coordinates of a position of a obstacle detected by the obstacle sensor used in the above system.

FIG. 5 is a plan view showing first and second judgment lines, which is used according to a steering angle in the above system.

FIG. 6 is a plan view showing a detection area of each obstacle sensor and the judgment lines varying according to the steering angle in the above system.

FIG. 7 is a flow chart showing an operation as the vehicle is running straight in the above system.

FIG. 8A - 8B are schematic plan views explaining an obstacle detection method as the vehicle is running straight in the above system.

FIG. 9 is a flow chart showing a operation as the vehicle is turning right in the above system.

FIG. 10A - 10D are schematic plan views explaining an obstacle detection method as the vehicle is turning right in the above system.

FIG. 11 is a schematic plan view showing a method of a collision judgment in the inside of the turn in the above system.

FIG. 12A - 12D are schematic views showing examples of a visual indication for notifying a collision judgment result in the above system.

FIG. 13 is a flow chart showing a whole procedure in the above system.

FIG. 14A - 14C are explanatory diagrams showing positional data of a non-diffused-reflection obstacle detected by the obstacle sensor in the above system.

FIG. 15A - 15C are explanatory diagrams showing positional data of a diffused-reflection obstacle detected by the obstacle sensor in the above system.

FIG. 16A - 16B are schematic plan views explaining a method of an additional collision judgment in the above system.

FIG. 17 is a flow chart for the above additional collision judgment.

FIG. 18A - 18E are schematic plan views showing examples of the above additional collision judgment.

FIG. 19 is a plan view showing a relation between a position of the detected obstacle changing with time, the detection area of each obstacle sensor, and the judgment line, in order to show an importance of delaying an alarm of the collision judgment.

FIG. 20 is a flow chart showing a validating method of the collision judgment used for a system in accordance with a second embodiment of the present invention.

FIG. 21A - 21C are schematic plan views of an obstacle detecting and alarming system for a vehicle in accordance with a third embodiment of the present invention, where the above system is applied to a rear end of the vehicle.

FIG. 22 is a schematic view of an obstacle detecting and alarming system for a vehicle in accordance with a fourth embodiment of the present invention

FIG.23 is a block circuit diagram of the above system .

FIG. 24 is a plan view showing detection area of each obstacle sensor and judgment criterions determined by the steering angle in the above system.

FIG. 25 is a flow chart showing an operation of a collision judgment based on the outputs from two obstacle sensors installed at front end centers of the vehicle in the above system.

FIG. 26A and FIG.26B are schematic plan views explaining the collision judgment as the vehicle is running straight in the above system.

FIG. 27 is a flow chart showing an operation of the collision judgment based on outputs from four obstacle sensors in the above system .

FIG. 28A and FIG.28B are schematic plan views explaining the collision judgment as the vehicle is turning right gently in the above system.

FIG. 29 is a flow chart showing an operation of the collision judgment based on outputs from four obstacle sensors in the above system .

FIG. 30A - 30C are schematic plan views explaining the collision judgment as the vehicle is turning right sharply in the above system.

BEST MODE FOR CARRING OUT THE INVENTION

First embodiment:

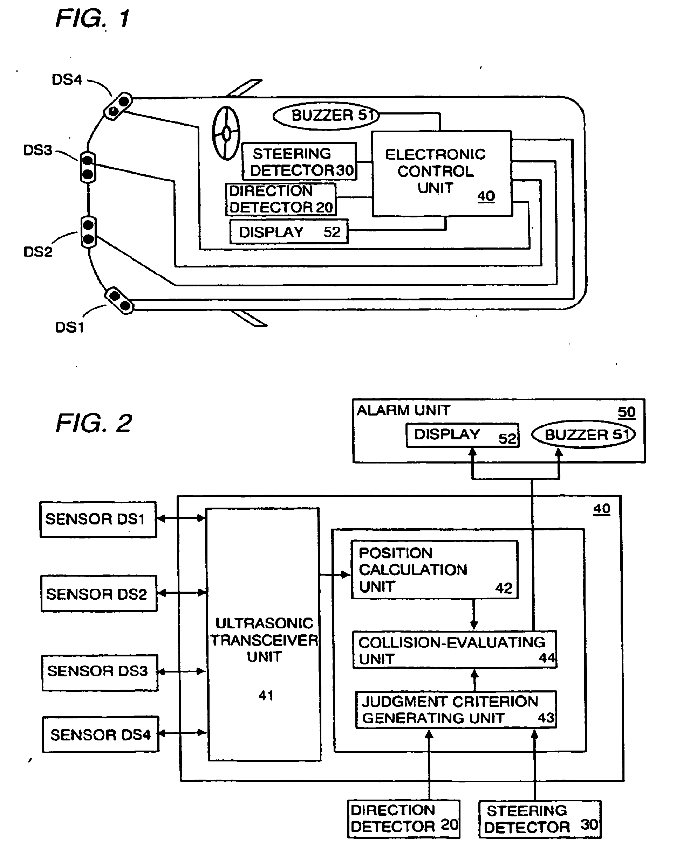

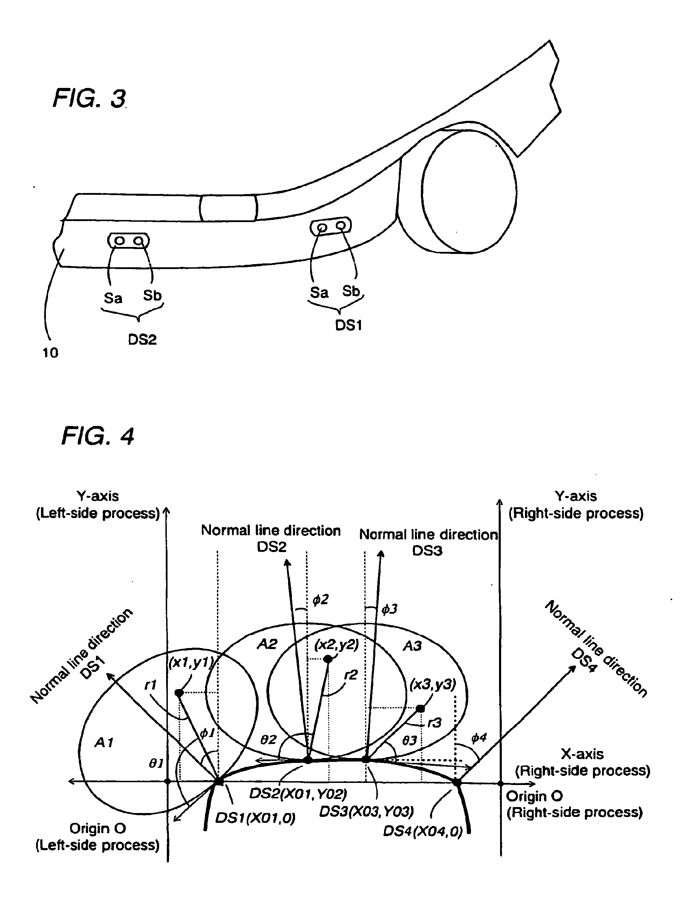

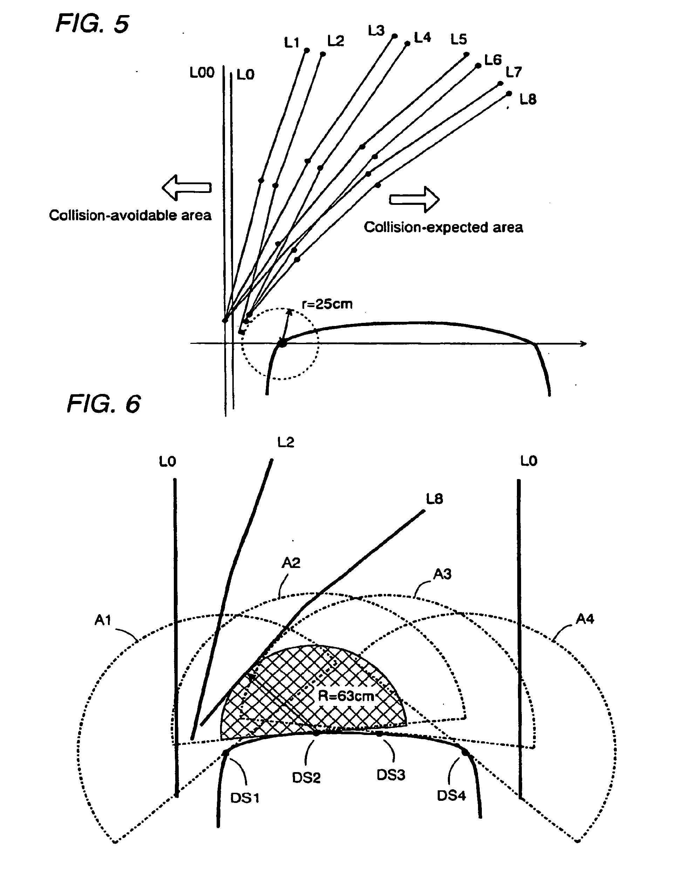

As shown in FIG. 1, an obstacle detecting and alarming system for a vehicle in accordance with a first embodiment of the present invention uses four obstacle sensors DS1, DS2, DS3, DS4. These obstacle sensors are installed at a front bumper 10 of the vehicle, as shown in FIG. 3. These obstacle sensors are disposed symmetrically with respect to a center longitudinal axis of the vehicle. Two obstacle sensors DS2 and DS3 are disposed at a center part with respect to the vehicle' width, and the remaining two obstacle sensors DS1 and DS4 are disposed at a width end corner parts of the vehicle. Each obstacle sensor has a limited detection area decided by a predetermined azimuth angle range and a predetermined detectable distance, and the detection area of each obstacle sensor is set equal, respectively. For example, as shown in FIG. 6, each of the detection area is a semicircular shape in a horizontal plane, whose azimuth angle is 180° and detectable distance is 100cm. Each obstacle sensor is a two-dimensional sensor including two ultrasonic sensor units Sa and Sb. One ultrasonic sensor unit Sa sends a ultrasonic wave, and then both sensor units Sa and Sb receive a reflected wave from an obstacle, if any, and output a reflected signal indicative of receiving of the reflected wave. Based on the output of each ultrasonic sensor unit, a positional data is given, which indicates an angle and a distance to the detected obstacle in the two-dimensional plane.

This system includes a direction detector 20 and a steering detector 30, in addition to the obstacle sensors. The direction detector 20 detects a running direction of the vehicle, i.e., whether the vehicle is moving forward or moving backward, from a position of a shift lever of the vehicle. The steering detector 30 detects a steering angle from an amount of rotation of a steering shaft. The output of the obstacle sensors DS1-DS4, the direction detector 20, and the steering detector 30 are sent to an electronic control unit 40.

The electronic control unit 40, As shown in FIG. 2, includes a ultrasonic signal transceiver unit 41, a position calculation unit 42, a judgment criterion generating unit 43, and a collision-evaluating unit 44. The position calculation unit 42 calculates a position of a detected obstacle. The judgment criterion generating unit 43 gives a judgment criterion for a collision judgment. The collision-evaluating unit 44 judges a possibility that the vehicle might collide with the detected obstacle, by checking the position of the obstacle with the judgment criterion.

The ultrasonic transceiver unit 41 makes one ultrasonic sensor unit Sa of each obstacle sensor send the ultrasonic signal regularly, and receives the reflected signals, which indicates the reflected wave from the detected obstacle, from both the ultrasonic sensor units Sa and Sb.

The position calculation unit 42 processes the reflected signals, and then gives the positional data indicative of coordinates of the detected obstacles in the horizontal plane. If the reflected signal came from obstacles which is a predetermined distance away from each obstacle sensor DS1-DS4 ( in this case, the predetermined distance = 100cm), the position calculation unit 42 regards the reflected signal as invalid. An effective detection distance is set to 100cm or less. If the distance to the detected obstacle turns out to be "longer than 100cm°, the position calculation unit 42 gives the positional data indicating that no obstacle exist.

As shown in FIG. 4, at first, the positional data is expressed by polar coordinates, which includes the distance $r1$-$r4$ and the angle $\theta1$-$\theta4$ from the installation position of each obstacle sensor to the detected obstacle, respectively. And then the positional data is converted into X-Y coordinates by using following equations (1)-(6). In this case, as shown in FIG. 4, the installation position of each obstacle sensors is expressed as DS1 (X01, 0), DS2 (X02, Y02), DS3 (X03, Y03), and DS4 (X04, 0) respectively in X-Y coordinates, and each angle to which the central axis of each sensor leans to a shaft parallel to the Y-axis is expressed as angle $\phi1$-$\phi4$, respectively.

Left-side process coordinate;

$$(x1, y1) = (X01 - r1\sin(\phi1 - (\theta1 - 90°)),\ r1\cos(\phi1 - (\theta1 - 90°))) \quad \text{(eq. 1)}$$

$$(x2, y2) = (X02 + r2\sin(\theta2 - \phi2 - 90°)),\ Y02 + r2\cos(\phi2 - (\theta1 - \phi2 - 90°)) \quad \text{(eq. 2)}$$

$$(x3, y3) = (X03 + r3\sin(\theta3 - \phi3)),\ Y03 + r3\sin(\theta3 - \phi3)) \quad \text{(eq. 3)}$$

Right-side process coordinate;

$$(x2, y2) = (X02 - r2\cos(\theta 2 - \phi 2)), Y02 + r2\cos(\theta 2 - \phi 2)) \qquad \text{(eq. 4)}$$

$$(x3, y3) = (X03 - r3\sin(\phi 3 - \theta 3 - 90°)), Y03 + r3\cos(\theta 3 - \phi 3 - 90°)) \qquad \text{(eq. 5)}$$

$$(x4, y4) = (X04 - r4\sin(\phi 4 - (\theta 4 - 90°)), r4\cos(\phi 4 - (\theta 4 - 90°))) \qquad \text{(eq. 6)}$$

The positional data of the three left obstacles DS1-DS3 can be calculated by the equations (1 )-(3), in which the coordinates have the origin on the left-side with respect to the running direction of the vehicle and the X-axis runs to the right-side (hereinafter called left-side process coordinate). The positional data of the three right obstacles DS2-DS4 can be calculated by the equations (4)-(6), in which the coordinates have the origin on the right-side with respect to the running direction of the vehicle and X-axis runs to the left-side (hereinafter called right-side process coordinate). The left-side process coordinate and the right-side process coordinate are selected according to the turning direction of the vehicle, as will mentioned later in detail.

The judgment criterion generating unit 43 receives the output from the direction detector 20 and the steering detector 30, i.e., the running direction of the vehicle and the steering angle, and determines an intended traveling path followed by the vehicle, and then gives the judgment criterion specific to the determined intended traveling path. The intended traveling path is a line expected that one width end of the vehicle, which is the outside of the turn, will follow according to the steering angle. The intended traveling path is determined, for example, by well-known Ackerman's theory. The judgment criterion is made by adding a predetermined margin to the outside of the intended traveling path, in consideration of the wheel base, the configuration of the body, and the configuration of corner parts of the vehicle. A formula for the judgment criterion has been created according to a type of vehicle and memorized beforehand. When the steering angle is inputted, the judgment criterion according to that steering angle is outputted. For example, as shown in FIG. 5, in a case where the vehicle turns right when it is moving forward, the judgment criterion is a set of first coordinate values which traces judgment lines L00-L8 respectively according to the steering angle. Each of the judgment line runs generally parallel to a line which is expected that the front left corner of the vehicle will follow, and spaced outwardly by a predetermined margin, for example, 32cm from the line. That is, the judgment criterion generating unit 43 gives plural judgment criterions varying according to the steering angle, and each judgment criterion gives a set of the first coordinate values which traces the peculiar judgment line, respectively.

The collision-evaluating unit 44 compares the positional data from the position calculation unit 42 with the judgment line from the judgment criterion generating unit 43, and

(1) generates a collision-expected signal when it judges that the positional data from any one of the obstacle sensors is inside the judgment line within the detection area of the corresponding obstacle sensor,
(2) generates a collision-avoidable signal when it judges that although any one of the obstacle sensors has detected some obstacle within the detection area, the positional data from the corresponding obstacle sensor is outside the judgment line, and
(3) generates a non-detection signal when it judges that no obstacle sensor detects obstacles within the detection area.

The collision-evaluating unit 44 operates an alarm unit 50 when it generates the collision-expected signal or the collision-avoidable signal, thereby an alarm message indicative of a collision-expected condition or a collision-avoidable condition is issued from a buzzer 51 or a display 52 as voice or visual indication, for a driver.

Hereinafter, the collision judgment will be described in more detail. As shown in TABLE 1, the judgment lines shown in FIG.5 are given according to plural steering angle($\theta$) ranges. Two kinds of judgment lines are generated in each of the steering angle range. One kind is standard judgment lines (L0, L2, L4, L6, L8), and the other is strict judgment lines (L00, L1, L3, L5, L7). The collision-evaluating unit 44 selects either the standard judgment line or the strict judgment line, based on an immediately previous judgment result. The strict judgment lines are designed to run generally parallel to the standard judgment line and space outwardly by a predetermined distance, for example, 10cm from the standard judgment line. Only in a case where the vehicle runs straight (-90° < steering angle($\theta$) < 90°), the strict judgment line L00 is designed to space outwardly by 3cm from the standard judgment line L0. In initial setting, one of the standard judgment lines (L0, L2, L4, L6, L8) is selected. Once the collision-expected signal is generated from the collision-evaluating unit 44, one of the strict judgment lines (L00, L1, L3, L5, L7) will be selected, thereafter the collision judgment is made based on the strict judgment line until the collision-expected signal stops.

Table 1

| Steering angle θ | | Immediately previous judgment result | | |
|---|---|---|---|---|
| Left turn : positive | | | | |
| Right turn : negative | | Collision-expected | Collision-avoidable | Non-detection |
| Right turn | θ ≤ -630° | L7 | L8 | |
| | -630° < θ ≤ -540° | L5 | L6 | |
| | -540° < θ ≤ -450° | L3 | L4 | |
| | -450° < θ ≤ -360° | L3 | L4 | |
| | -360° < θ ≤ -270° | L1 | L2 | |
| | -270° < θ ≤ -180° | L1 | L2 | |
| | -180° < θ ≤ -90° | L00 | L0 | |
| Running straight | -90°<θ<90° | L00 | L0 | |

Although the above explanation referring to FIG.5 and Table 1 illustrates only the case where the vehicle runs straight or turns right for easy understanding , the same judgment criterion can be used when the vehicle turns left. The number of the judgment lines, i.e., the number of the angle ranges, is not limited to the above example, it can be increased or decreased, if needed. It is also possible to use the judgment line which changes continuously according to the steering angle.

FIG. 6 shows a relation between the detection area of each obstacle sensor and the standard judgment lines (L0, L2, L8). The detection area of each obstacle sensor is set equal, respectively. A range of the detection area and the position of the obstacle sensors are designed according to the judgment line, which varies with a type of vehicle, so that the following conditions may be satisfied.

(1) Both the detection area A3 and A4 of the two obstacle sensors DS3 and DS4, located in the inside of the turning direction of the vehicle (right direction, in this case), are all inside the standard judgment line L8 which is used when the steering angle is maximum, and a part of a boundary of the detection area A3 of the obstacle sensor DS 3, located at the right-hand center part of the vehicle, touches the standard judgment line L8.

(2) Both the Detection Area A2 and A3 of the two obstacle sensors DS2 and DS3, located at the center of the vehicle, are inside the right-and-left two judgment lines L0,L0 which are used when the vehicle runs straight (i.e., -90° < steering angle (6) < 90°), and part of boundaries of these detection area touch the judgment lines L0, L0.

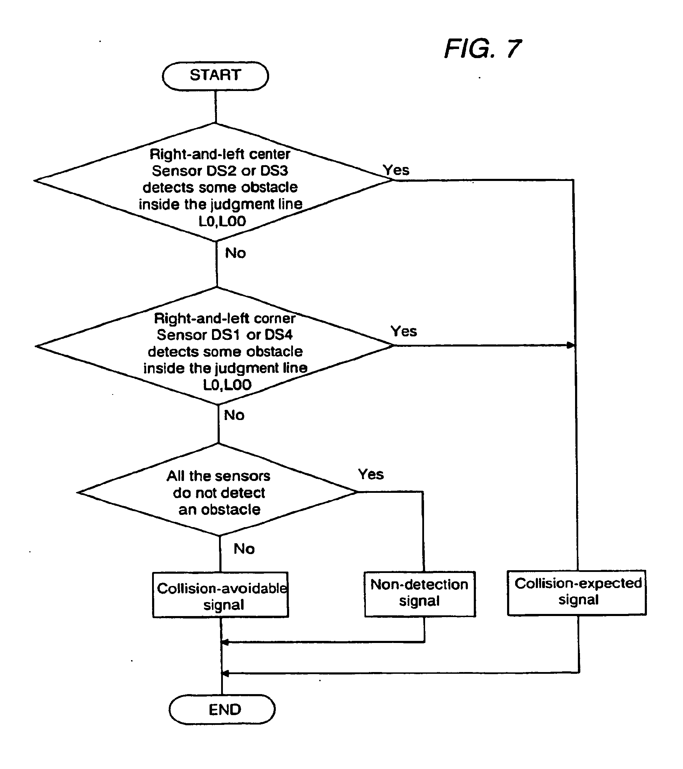

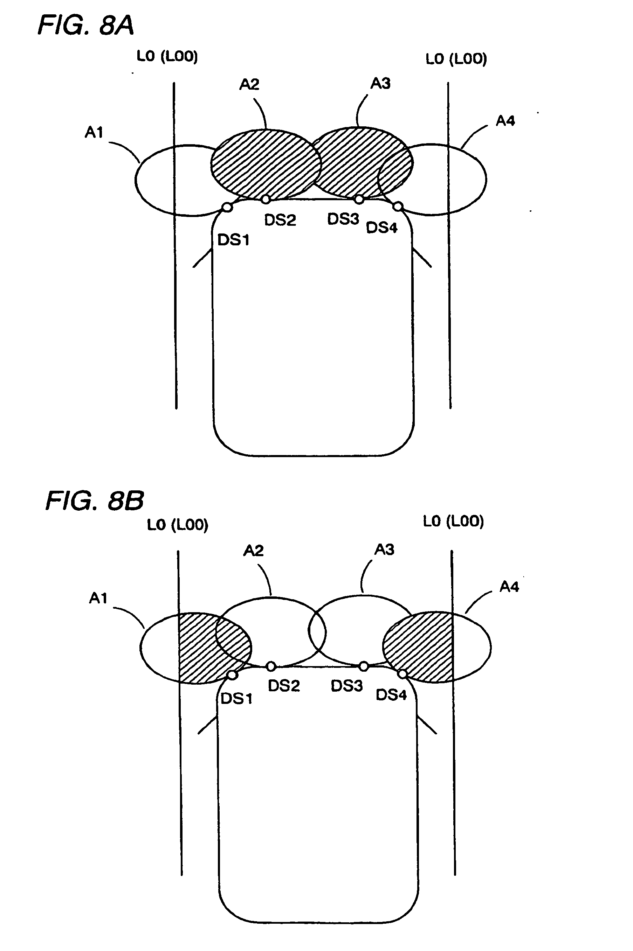

With reference to FIG. 7 and FIG. 8, a procedure of the collision judgment as the vehicle runs straight (-90° < steering angle (8) < 90°) will be described, In this case, the judgment line L0 or L00 is applied from Table 1. First, the collision-evaluating unit 44 gets the positional data from the obstacle sensors DS2 and DS3 at the right-and-left center parts of the vehicle, and as shown in FIG. 8A, it checks whether there is an obstacle within the detection area A2 and A3 of these obstacle sensors. When there is an obstacle within the detection area and it is judged that the positional data of the detected obstacle is inside the judgment lines L0 or L00, the collision-evaluating unit 44 generates the collision-expected signal and ends the collision judgment. Otherwise, the collision-evaluating unit 44 gets the positional data from the obstacle sensors DS1 and DS4 located at the right-and-left corner parts, and, as shown in FIG. 8B, when it is judged that the positional data of the obstacle within the detection area A1, A4 is inside the judgment line LX (= L0 or L00), the collision-evaluating unit 44 generates the collision-expected signal and ends the collision judgment. Other than the above, the collision-evaluating unit 44 checks whether any one of the obstacle sensors detects an obstacle within the detection area, and when it is judged that there is an obstacle within the detection area, the collision-evaluating unit 44 generates the collision-avoidable signal and ends the collision judgment. When it is judged that there is no obstacle within the detection area, the collision-evaluating unit 44 generates the non-detection signal and ends the collision judgment. The above collision judgment is made continuously every predetermined time.

As shown in FIG. 8A, in a case where the vehicle is running straight, because both the detection area A2 and A3 of the two center obstacle sensors DS2 and DS3 are all included in the inside of the two judgment lines on both sides of the vehicle, the collision-evaluating unit 44 can judge that the positional data of the detected obstacle is inside the judgment lines L0 or L00 and generate the collision-expected signal at the point in time when the collision-evaluating unit 44 gets the outputs of the two obstacle sensors DS2 and DS3 first and it is turned out that the non-detection signal is not generated (i.e., there is some obstacle in the detection area). That is, in such a condition, the collision-evaluating unit 44 can make the collision judgment without processing the positional data with reference to the judgment line. That is, the collision-evaluating unit 44 can judge a danger of the collision early without waiting for the collision judgment using the outputs from the obstacle sensors at the right-and-left corner parts.

In a process of the first flow in FIG. 7, the detection of an obstacle by the right-and-left center obstacle sensors DS2, DS3 can be made easily by using the FIG. 4 and the equations (1)-(6), thereat either the right-side process coordinate or the left-side process coordinate is processed.

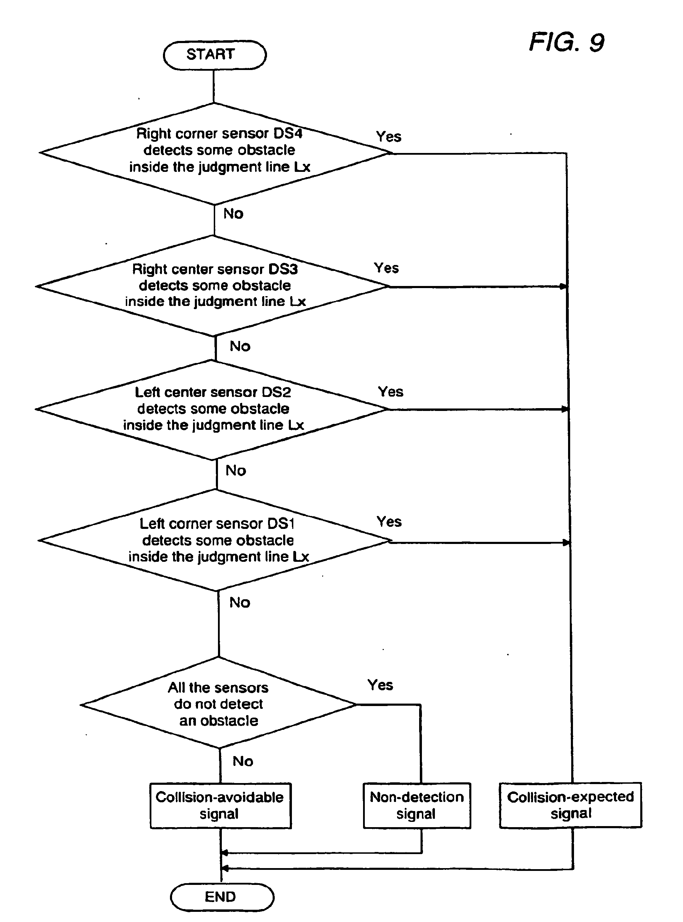

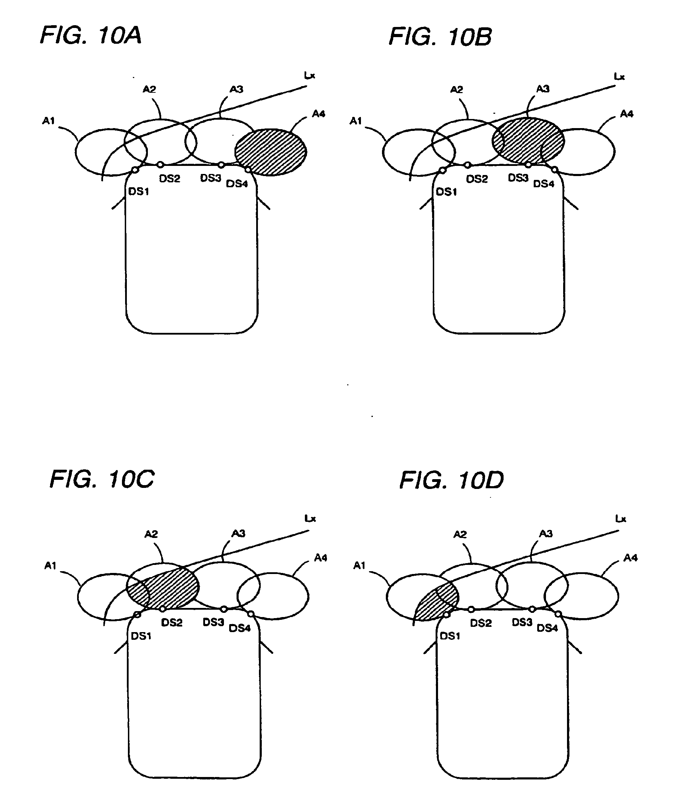

Next, with reference to FIG. 9 and FIG. 10, a procedure of the collision judgment as the vehicle is turning with the maximum steering angle (in this case, turn right) will be described. In this case, the judgment line Lx (= L8 or L7) is applied from Table 1. The collision-evaluating unit 44 gets the positional data one by one from each obstacle sensor in the order from the corner part which is the inside of the turn (right side in this case) to the opposite corner part (i.e., DS4 → DS3 → DS2 → DS1). And the collision-evaluating unit detects obstacles in the detection area in the order shown in FIGS. 10A-10D (i.e., A4 → A3 → A2 → A1). When it is judged that the positional data of the detected obstacle is inside the judgment line Lx within the detection area, the collision-evaluating unit 44 generates the collision-expected signal and ends the collision judgment at that time. Otherwise, when an obstacle is detected in the detection area of any one of the obstacle sensors under the condition where the collision-expected signal is not generated, the collision-evaluating unit 44 generates the collision-avoidable signal and ends the collision judgment. Other than the above, when no obstacle is detected in the detection area of any one of the obstacle sensors, the collision-evaluating unit 44 generates the non-detection signal.

In this case, as shown in FIG. 10, because both the detection area of the two obstacle sensors DS4 and DS3, which are located in the inside of the turn, are all included in the inside of the judgment line Lx (= L8 or L7) as the steering angle is maximum, the collision-evaluating unit 44 can judge that the positional data of the detected obstacle is inside the judgment line Lx and generate the collision-expected signal at the point in time when the collision-evaluating unit 44 gets the outputs of the obstacle sensors DS4 and DS3 and it is turned out that some obstacle is detected in the detection area A4 and A3. That is, in such a situation, the collision-evaluating unit 44 can make the collision judgment without processing the positional data with reference to the judgment line. That is, the collision-evaluating unit 44 can judge a danger of the collision early without waiting for the collision judgment using the outputs from the two obstacle sensors DS2, DS1 located in the outside of the turn, thereby it is possible to inform a driver about the danger of the collision at an early stage.

Although the above explanation illustrates only the case where the vehicle turns right, right-left flipped logic is used in the same procedure as the vehicle turns left.

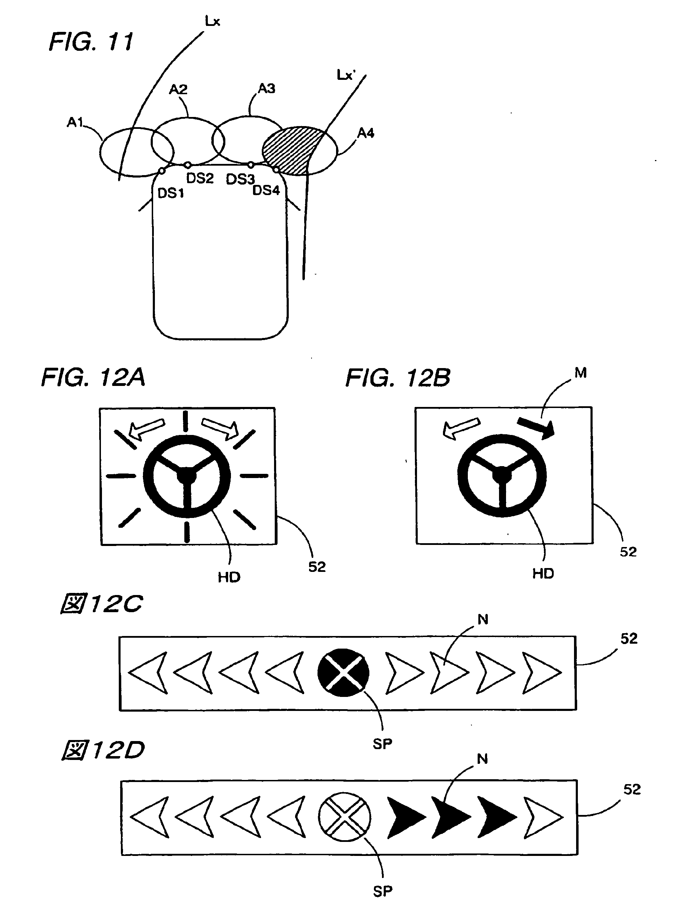

Furthermore, although the above explanation showed the example in which the judgment line is given in the outside of the turn, except when the vehicle runs straight, the judgment criterion generating unit 43 may give an additional judgment line Lx' in the inside of the turn, as shown in FIG. 11. The additional judgment line is given in consideration of a difference of traveling path between a front wheel and a rear wheel. The collision-evaluating unit 44 generates the collision-expected signal when an obstacle is detected inside both the right-and-left judgment lines Lx, Lx' within the detection area of any one of the obstacle sensors. Specifically, as shown in FIG.11, if the additional judgment line Lx is set so that it may pass through the detection area of the detection sensor D4, nearest to the inside of the turn, the alarm message, which indicates the way how to avoid the obstacle, located in the inside the turn, in a short distance with consideration of the difference of traveling path between the front wheel and rear wheel, can be given to the driver.

When the collision-expected signal is generated as the judgment result, the buzzer 51 of the alarm unit 50 starts operating and generates the discontinuous sounds indicative of the approach of the danger. And, at the same time, a symbol on the display 52 starts blinking. In this way, this system alert the driver. In this case, as for the interval of the discontinuous sounds of the buzzer and the interval of the blink of the symbol, it is preferable to make them change according to the distance to the nearest obstacle that produced the collision expectation. For example, the interval becomes shorter as the distance becomes shorter. When the collision-avoidable signal is generated as the judgment result, the buzzer 51 is stopped, not to give the driver an unnecessary alarm. Or if the collision-avoidable signal is generated as the judgment result, the buzzer 51 generates a sound of a different tone to inform the driver of the collision-avoidable condition. Thereat, it is preferable to give the visual indication, which indicates the collision-avoidable condition, on a display 52. When the non-detection signal is generated as the judgment result, the buzzer 51 and the display 52 are stopped.

FIG. 12 shows an example of the display 52. The display includes a symbol HD showing a steering wheel, and arrow symbols M showing a turn direction. In a case where it is expected that the collision-expected signal will be generated even if the driver makes the steering angle into the maximum from the current steering angle, the steering wheel symbol HD blinks, as shown in FIG. 12A, to inform the driver that there is a danger of a collision and the collision is not avoidable even if the steering wheel is operated any way. In a case where it is expected that the collision-avoidable signal will be generated if the driver makes the steering angle into the maximum, both the steering wheel symbol HD and the arrow symbol M showing the current turn direction light up, as shown in FIG. 12B, and informs the driver that the collision is avoidable if the steering wheel is turned toward the direction of the arrow. FIG. 12C and FIG. 12D show another example of the display 52, which includes a stop symbol SP and arrow marks N. The stop symbol SP indicates that the vehicle should stop. The arrow marks N indicate a degree that the vehicle should turn, and are disposed both sides of the symbol SP. In a case where it is expected that the collision-expected signal will be generated even if the driver makes the steering angle into the maximum, the stop symbol SP will light up. In a case where it is expected that the collision-avoidable signal will be generated if the driver turn the steering wheel to the right until, for example, 540°, thought the collision is expected if the steering wheel is kept at a current angle, the stop symbol SP of the center goes out, as shown in FIG. 12D, and the arrow marks N, whose number indicates that the steering angle is 540°, light up, and informs the driver that the collision is avoidable if the steering wheel is turned to the right until 540°. The buzzer 51 of the alarm unit 50, and the alarm message on the display 52 are not limited to the above examples, and other various methods can be used for them.

Furthermore, this system generates a sound in order to inform the driver whether the system is working correctly, when a condition where no obstacle exist nearby changes into a condition where some obstacle exists nearby. For this purpose, the collision-evaluating unit 44 generates a start signal when an obstacle is recognized in the detection area of any one of the obstacle sensors for the first time. In response to the start signal, the sound with predetermined frequency (for example, 1.5kHz) is generated from the buzzer 51, and after predetermined time has passed, the sound with different frequency (for example, 1.0kHz) is generated in a short time. Thereby, the driver can be aware that there is an obstacle nearby, and the system works correctly to make the collision judgment.

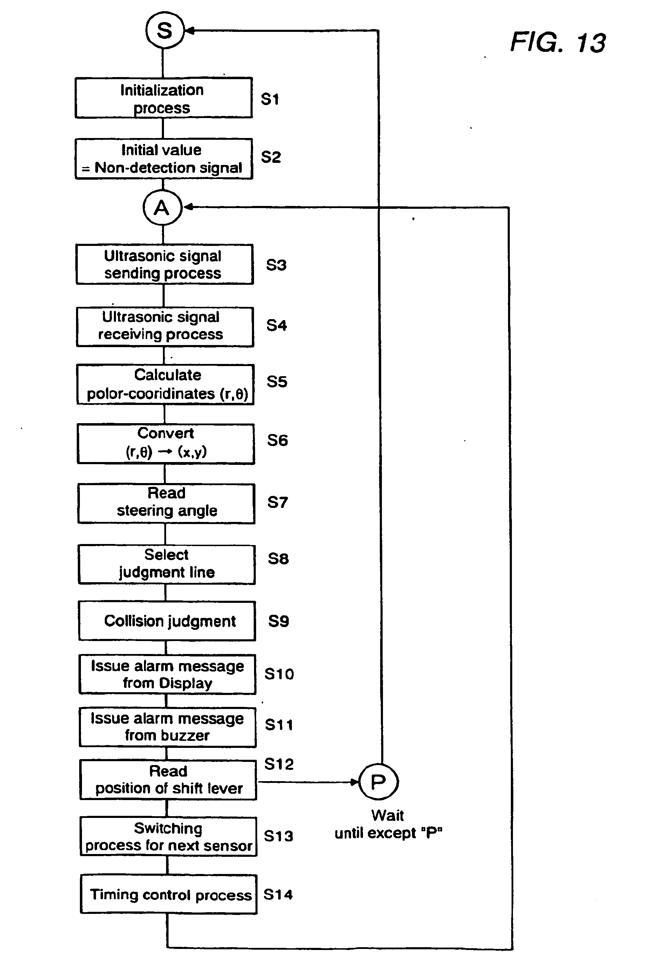

FIG. 13 is a flow chart showing the procedure of the whole operation of this system explained above. First, after executing an initialization process (S1), the initial value of the judgment result is set to the non-detection signal in the collision-evaluating unit 44 (S2). In the next step (S3), the ultrasonic signal transceiver unit 41 makes the obstacle sensor send the ultrasonic signal (ultrasonic signal sending process). In the next step (S4), The reflected wave was received by the obstacle sensor and a ultrasonic signal receiving process is executed. In the next step (S5), the position calculation unit 42 calculates the polar coordinates (r, θ) of the obstacle detected by this obstacle sensor, and then, In the next step (S6), the position calculation unit 42 converts the positional data of the polar coordinates (r, θ) into the X-Y coordinates (x y). In the next step (S7), the judgment criterion generating unit 43 reads the steering angle from the output of the steering detector 30, and then, in the next step (S8), the judgment criterion generating unit 43 selects the judgment line according to the steering angle. In the next step (S9), the collision-evaluating unit 44 judges whether the condition is the collision-expected condition or the collision-avoidable condition by comparing the positional data with the judgment line. Based on this judgment result, the alarm message is issued from the display 52 and the buzzer 51 (S10, S11). In the next step (S12), the direction detector 20 reads the position of the shift lever, and if the position of the shift lever is not "parking <P>" position, in the next step (S13), a switching process to re-execute the above process for the next obstacle sensor is executed. In the next step (S14), a timing control process is executed. And after a predetermined time has passed, the step (S3) and the following steps are executed again. If the position of the shift lever is "<P>", the process is interrupted until the position of the shift lever has changed except "<P>". If the position of the shift lever has changed except "<P>", the step (S1) and the following steps are executed again.

Furthermore, the system of this embodiment has a function to make the collision judgment precisely even if the obstacle is a diffused-reflection object, like a wire fence.

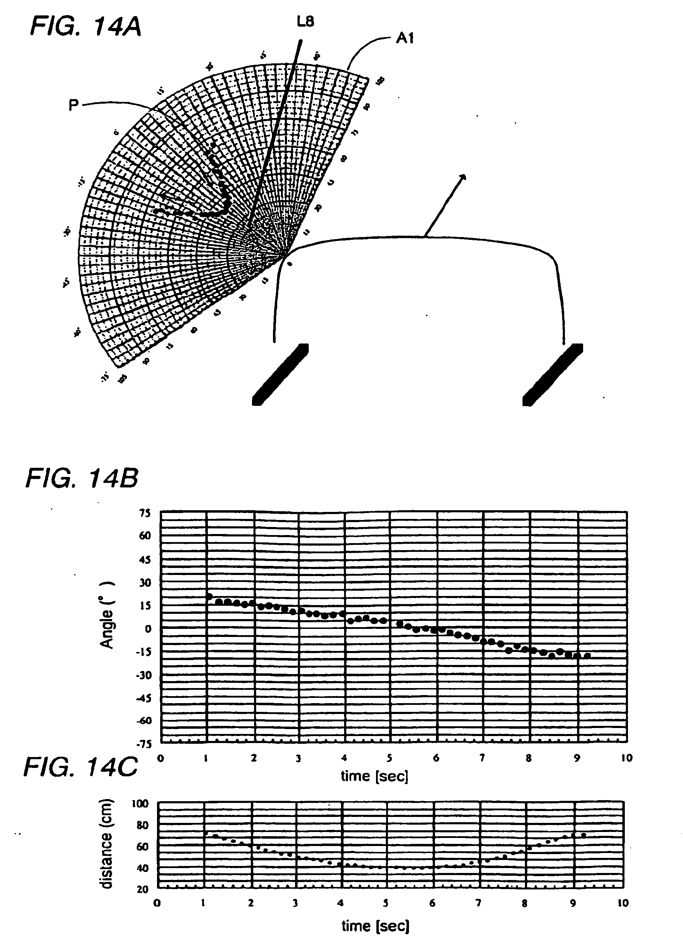

FIGS. 14A, 14B, and 14C show the positional data of a obstacle which is not a diffused-reflection. For example, the obstacle is a concrete wall. In this case, the positional data changes as the vehicle runs, and the detection angle and the detection distance do not scatter.

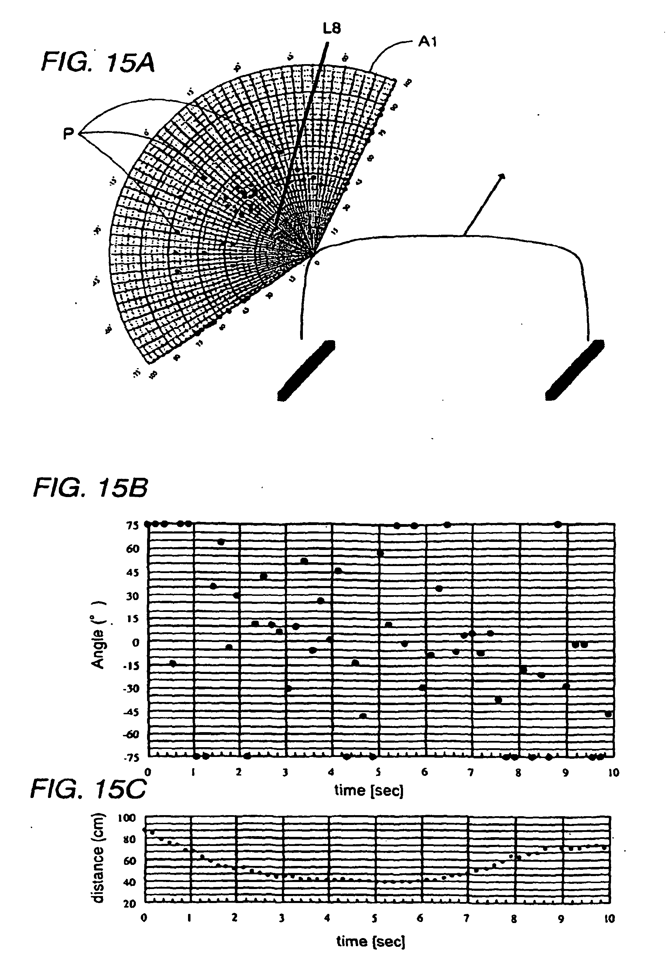

However, as shown in FIGS. 15A, 15B, and 15C, in a case where the obstacle is a diffused-reflection object like a wire fence, although the detection distance does not scatter, the detection angle scatters widely as the vehicle runs. Consequently, the reliability of the positional data decreases greatly, and a mistaken judgment result may be outputted, if the collision judgment is made based on the positional data of each obstacle sensor with the judgment line referencing.

In order to solve such a problem, the collision-evaluating unit 44 stores the angle data of immediately past several times, for example, 5 times, in a memory. If a range of a variation between the maximum value of these angle data and the minimum value exceeds a predetermined value, for example, 30°, the collision-evaluating unit 44 determined an angle indefinite condition, and judges that the obstacle is a diffused-reflection object, and sets a flag indicative of the angle indefinite condition to "ON" (diffused-reflection flag = "ON"). If the diffused-reflection flag is not "ON", the collision-evaluating unit 44 executes the above explained collision judgment, and if the diffused-reflection is "ON", the collision-evaluating unit 44 derives the distance data from the obstacle sensor causing the angle indefinite condition, and compares the distance data with a predetermined threshold distance, and executes the collision judgment based on this comparison result. One of plural distance (for example, 100cm, 63cm, and 50cm) is applied to the predetermined threshold distance. It is determined based on a predetermined pattern according to the current steering angle that which distance is applied to the threshold distance of each obstacle sensor. The predetermined pattern is determined by the judgment criterion generating unit 43.

For example, as shown in FIG. 6, when the steering angle is the maximum to the right-hand, and the judgment line L8 is selected, the collision-evaluating unit 44 makes the collision judgment based on the following pattern;

(1) if the obstacle sensor DS4 or DS3 detects an obstacle in the detection area (i.e., the distance from the obstacle sensor to the detected obstacle is within 100cm), the collision-expected signal is generated about these sensor.
(2) If the obstacle sensor DS2 detects an obstacle which is 63cm or more away from the obstacle sensor, the collision-avoidable signal is generated about this sensor.
(3) If the obstacle sensor DS2 detects an obstacle which is less than 63cm away form the obstacle sensor, the collision-expected signal is generated about this sensor.
(4) If the obstacle sensor DS1 detects an obstacle which is 50cm or more away from the obstacle sensor, the collision-avoidable signal is generated about this sensor.
(5) If the obstacle sensor DS1 detects an obstacle which is less than 50cm away from the obstacle sensor, the collision-expected signal is generated about this sensor.

Although the above example showed only the case where the vehicle turns right with the maximum steering angle, when the vehicle turns left with the maximum steering angle, the judgment criterion based on the threshold distance given to each obstacle sensor, flipped. It is preferable to vary the threshold distance given to each obstacle sensor according to the steering angle. In this case, the threshold distance given to the obstacle sensor located at the outside corner part with respect to the turn direction is designed shorter than the one given to the obstacle sensor located in the inside of the turn.

Although, in the above example, the range of the variation of the angle data is calculated as a difference between the maximum value and the minimum value of the angle data among the immediately past 5 times, the range of the variation may be calculated by statistical methods, such as "distribution" or "standard deviation" of the angle data of a predetermined number.

If one sensor unit Sa or Sb of the two-dimensional obstacle sensor can not output an effective value, because of failure or other factor, the positional data is accompanied only with the distance data and not with the angle data. It is preferable to prevent a crisis of the collision in such a condition. For this purpose, the effective azimuth range of each detection area has been set, for example, within $150°(\pm 75°)$. And if the detected angle data is less than 75°, the position calculation unit 42 considers the above angle data to be effective and outputs that angle data. If the effective output is not obtained from either the sensor unit Sa or Sb, the position calculation unit 42 outputs the threshold value as the angle data. Specifically, the position calculation unit 42 outputs +75° as the angle data (in a case where the effective output is obtained from only the sensor unit Sa), or outputs -75° (in a case where the effective output is obtained from only the sensor unit Sb). When the collision-evaluating unit 44 receives +75° or -75° as the angle data, the collision-evaluating unit judges that it is in the angle detection failure condition, and executes the collision judgment by the same procedure as the collision judgment to the diffused-reflection object mentioned above. If diffused-reflection flag is not "ON" and it is not in the angle detection failure condition, a normal collision judgment, as mentioned above, is executed. In addition, the above threshold value can be chosen arbitrarily according to the effective azimuth range set in the detection area.

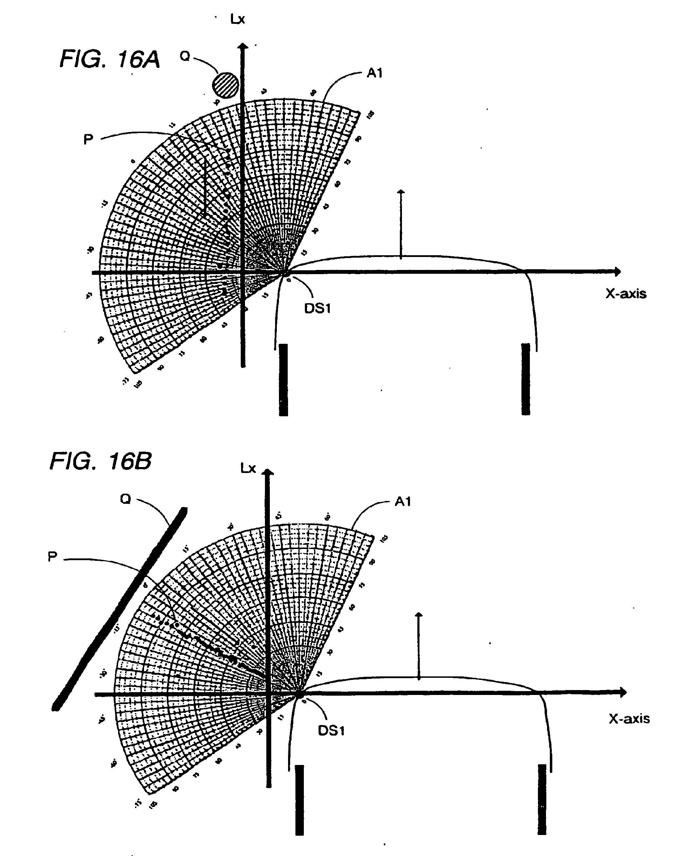

Furthermore, the system of this embodiment has a function which can judge the possibility of the collision with an obstacle at an early stage in a case where the vehicle runs straight (-90° < steering angle $(\theta)$ < 90°) with comparatively high speed. For example, as shown in FIG. 16A, in a case where a local obstacle Q, e.g., a cone, exists ahead and the obstacle is outside the judgment line Lx, the vehicle will not collide with the obstacle even if it runs straight as it runs, and the positional data P of the obstacle, as plotted in the FIG.16A, are always detected outside the judgment line Lx. But, as shown in FIG. 16B, if a long obstacle Q (for example, a wall), which slants to the running direction of the vehicle, exists, it is expected that the vehicle will collide with the wall if it runs straight as it runs. In such a case, the positional data P, as plotted in this FIG. 16B, are detected outside the judgment line Lx first, but, as the vehicle runs, they approach the judgment line gradually, and finally, they collide with the vehicle. In such a condition, it is preferable to be aware of the danger of the obstacle at an early stage and execute the collision judgment.

For this purpose, in this system, the collision-evaluating unit 44 watches time series data of the positional data obtained from the obstacle sensors DS1 and DS4 located at the corner parts. And the collision-evaluating unit 44 analyzes a locus of a change of the positional data, from a time when the obstacle is detected in the detection area of these obstacle sensors. And the collision-evaluating unit 44 generates the collision-expected signal when it is judged that the locus will intersect the judgment line Lx if the locus runs as it does.

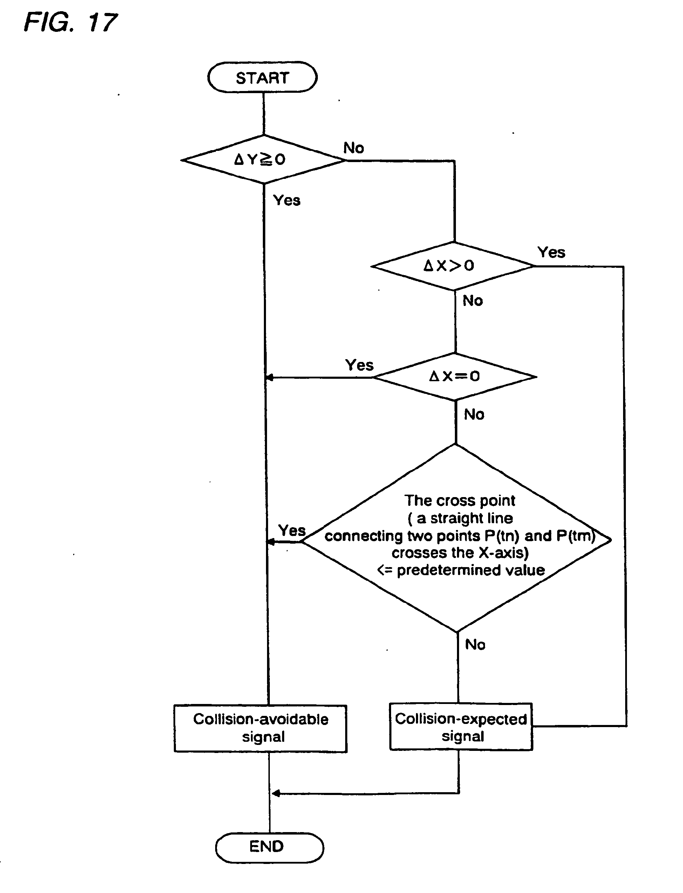

Specifically, based on the positional data $P(tn) = [Xn, Yn]$, $P(tm) = [Xm, Ym]$, which is the positional data of the obstacle at the time tn, tm (tn < tm) within a two-dimensional X-Y coordinates plane, the collision-evaluating unit 44 calculates a difference of the Y coordinates values of the two points $(\Delta Y = Ym - Yn)$, and if this difference $\Delta Y$ exceeds

a predetermined value, it calculates a difference of the X coordinates values of the two points ($\Delta X = Xm - Xn$), and then executes the collision judgment according to the flow chart shown in FIG. 17. First, if the $\Delta Y \geq 0$, the collision-evaluating unit 44 judges that the detected obstacle is going away from the vehicle gradually along with the Y coordinate, or the detected obstacle is going parallel to the vehicle, and generates the collision-avoidable signal. If the $\Delta Y < 0$, then the $\Delta X$ is checked, and if the $\Delta X > 0$, the collision-evaluating unit 44 judges that the detected obstacle is approaching the vehicle along with the X coordinate, and generates the collision-expected signal. If the $\Delta X = 0$, the collision-evaluating unit 44 judges that the obstacle is remaining spaced by a safe distance from the vehicle, and generates the collision-avoidable signal. If the $\Delta X < 0$, i.e., the detected obstacle is going away from the vehicle along with the X coordinate, the collision-evaluating unit 44 calculates the cross point that a straight line connecting two points P(tn) and P(tm) crosses the X-axis. And if the value of the cross point is less than or equal to a predetermined value, the collision-evaluating unit 44 judges that the obstacle will go away from the vehicle in a safe distance along with the X coordinate if the vehicle runs as it does, and generates the collision-avoidable signal. However, if the value of the cross point is greater than the predetermined value, the collision-evaluating unit 44 judges that although the obstacle is going away from the vehicle along with the X coordinate, it will not be outside the judgment line, and generates the collision-expected signal.

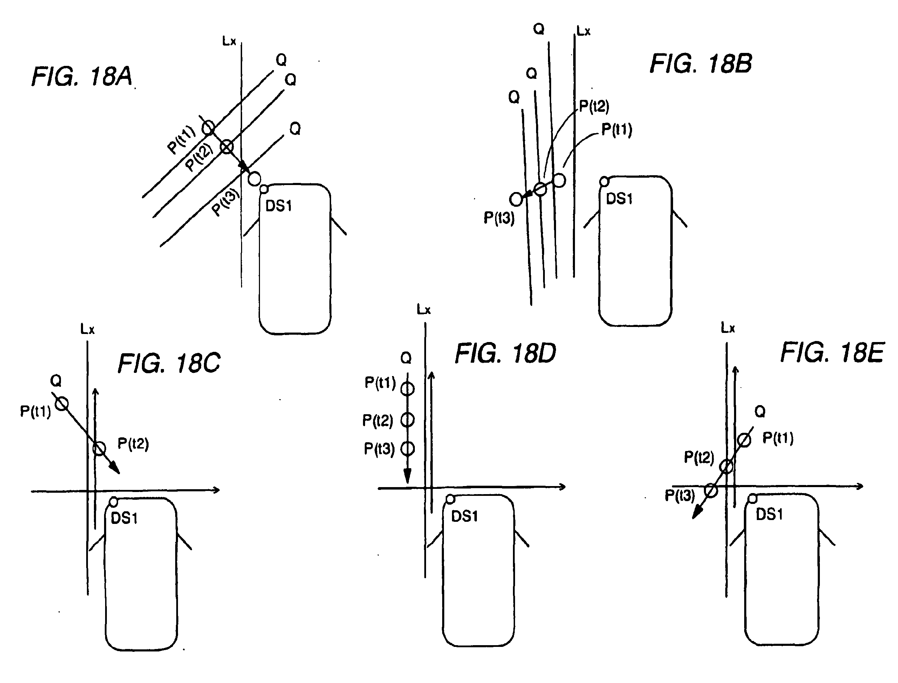

In FIG. 18, a situation where the expectation of the collision is judged at an early stage, as mentioned above, is illustrated. FIG. 18A is a schematic drawing showing a case where the vehicle finally collides with a long obstacle Q, like a wall, which slants to the running direction of the vehicle. In such a case, the collision-evaluating unit 44 can generate the collision-expected signal at the time t2, when the positional data P(t1) changes into P(t2), i.e., the $\Delta Y$ is less than zero ($\Delta Y < 0$ ; the detected obstacle is approaching the vehicle along with the Y coordinate) and, at the same time, the $\Delta X$ is greater than zero ($\Delta X > 0$ ; the detected obstacle is approaching the vehicle along with the X coordinate), in the outside of the judgment line Lx. That is, the collision-evaluating unit 44 can inform the danger of the collide earlier than the time t3, when the positional data P(t3) is detected in the inside of the judgment line Lx.

FIG. 18B shows a case where the same obstacle Q goes away from the vehicle, schematically. In this case, the $\Delta Y$ is less than zero ($\Delta Y < 0$), and, at the same time, the $\Delta X$ is less than zero ($\Delta X < 0$; the detected obstacle is going away form the vehicle along with the X coordinate), and the latest positional data P (t2) is outside the judgment line. In such a case, the collision-evaluating unit 44 can judge that the obstacle will go away further from the outside of the judgment line, and generates the collision-avoidable signal.

FIG. 18C shows a case where it is judged from the positional data P(t1) and P(t2) that a local obstacle Q is approaching the vehicle along with both X coordinate and Y coordinate as the vehicle runs (i.e., the $\Delta Y < 0$, and the $\Delta X > 0$). In this case, at the time t2, when the positional data P(t2) does not move into the inside of the judgment line Lx, the collision-evaluating unit 44 expects that the obstacle will collide with the vehicle at the time t3, and generates the collision-expected signal.

FIG. 18D shows a case where it is judged from the positional data P(t1), P(t2) that the same local obstacle Q is approaching along with the Y coordinate ($\Delta Y < 0$), and keeps a fixed distance with respect to the X coordinate ($\Delta X = 0$). In such a case, the collision-evaluating unit 44 expects that the obstacle will be outside the judgment line Lx at the time t3, and generates the collision-avoidable signal.

FIG. 18E shows a case where it is judged from the positional data P(t1), P(t2) that the some local obstacle Q is inside the judgment line Lx at the time t1, and, at the time t2, the obstacle is approaching the vehicle along with the Y coordinate ($\Delta Y < 0$) and, at the same time, going away from the vehicle along with the X coordinate ($\Delta X < 0$). In such a case, because the value of the cross point that the straight line connecting the two points P(t1) and P(t2) crosses the X-axis is less than a predetermined value (for example, the X coordinate value of the judgment line Lx), the collision-evaluating unit 44 expects that the obstacle does not collide with the vehicle at the time t3, and generates the collision-avoidable signal at the time t2 (t2 < t3), at an early stage. If the value of the cross point is greater than the predetermined value, the collision-evaluating unit 44 judges that the obstacle will be still inside the judgment line at the time t3, and generates the collision-expected signal.

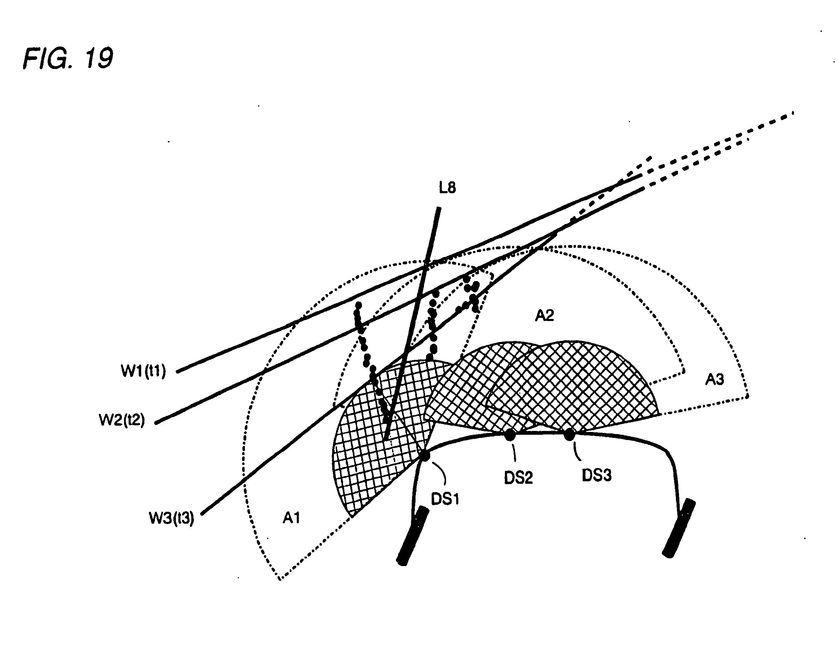

In addition, the system has a function which enables a driver to drive a vehicle in a narrower place with avoiding obstacles at a short distance, without changing the judgment criterion of the collision. For this purpose, this system can delay the beginning of the alarm message informing the collision judgment to the driver. That is, the function can make the driver think as if the criterion of the collision judgment has become loose, and give the driver a judgment which enables the driver to pull the vehicle to an obstacle closer, without changing the judgment criterion of the collision. FIG. 19 shows a situation which needs the above function. In this situation, there is an obstacle Q, like the long wall, which lies ahead of the vehicle, and the vehicle is turning with a large steering angle to avoid the obstacle Q. The position of the obstacle changes (W(t1) → W(t2) → W(t3)) as time passed (t1 → t2 → t3), and the outside of the vehicle with respect to the turn ends up colliding with the obstacle. In this case, at the time t1, the obstacle is detected inside the detection area of the obstacle sensor DS1 located in the outside of the turn, and the collision-avoidable signal is generated (because it is judged that the detected obstacle is outside the judgment line Lx). At the time t2, the obstacle is detected inside the detection area of the obstacle sensor DS2, DS3 located at the center part of the vehicle, and the collision-expected signal is generated, because it is judged that the detected obstacle is inside the judgment line Lx. If the alarm message is given to the driver at this time t2, the driver is reluctant to advance the vehicle more at that time. If the alarm message is not given to the driver, the driver can advance the vehicle with the steering angle kept until the time t3 when the collision with the obstacle is imminent. That is, the driver can pull the vehicle to the obstacle closer.

For this purpose, the detection area of each obstacle sensor DS1, DS2, DS3, or DS4 is divided into a short-distance range (for example, less than 50cm) and a long-distance range (50cm-100cm), and the obstacle is detected in each range. The collision-evaluating unit 44 forbids the alarm unit 50 to give the alarm message until any obstacle sensor detects an obstacle in the short-distance range. Thereby, the result as shown in the following table 2 is obtained in the situation of FIG. 19.

Table 2

| Time | t1 | | | t2 | | | t3 | | |
|---|---|---|---|---|---|---|---|---|---|
| Sensor | DS1 | DS2 | DS3 | DS1 | DS2 | DS3 | DS1 | DS2 | DS3 |
| Detection condition of an obstacle | detects in the long-distance range | non-detection | non-detection | detects in the long-distance range | detects in the long-distance range | detects in the long-distance range | detects in the short-distance range | detects in the long-distance range | detects in the long-di stance range |
| Inside or outside the judgment line Lx | outside | | | outside | inside | inside | outside | inside | inside |
| Judgment | Collision-avoidable | | | Collision-expected | | | Collision-expected | | |
| Alarm | not given | | | not given | | | given | | |

As shown the above table, at the time t1, the judgment is "collision-avoidable" and the alarm is not given. At the time t2, the judgment is °collision-expected° but the alarm is not given. And at the time t3, the judgment is "collision-expected" and the alarm is given. For this reason, as shown in FIG. 19, the driver can pull the vehicle to the position W (t3) at the time t3.

Although, in the above example, the alarm is not given at the time t2 when the obstacle is detected only in the long-distance range, an alarm, which is different from the alarm message given when the obstacle is detected in the short-distance area, may be given to the driver at the time t2.

Furthermore, although four obstacle sensors are used in this embodiment, the present invention is not necessarily limited only to this, and can use arbitrary numbers of obstacle sensors, if needed. For example, in a case where only one obstacle sensor is used, it is preferable to use a sensor which can detect comparatively long distance. Thereat, all the judgment lines, which vary according to the steering angle, touch or cross this detection area. The collision-expected signal or the collision-avoidable signal is generated based on whether the obstacle detected in the detection area is inside the judgment line or outside the judgment line. And the non-detection signal is generated when no obstacle is detected in the detection area.

Second embodiment:

Although this embodiment is fundamentally identical to the first embodiment, it is characterized by verifying the current judgment result with reference to previous judgment results or the distance data at that time, in order to raise the reliability of the collision judgment. The other structures are identical with the first embodiment, therefore the same parts in each embodiment are assigned the same reference number.

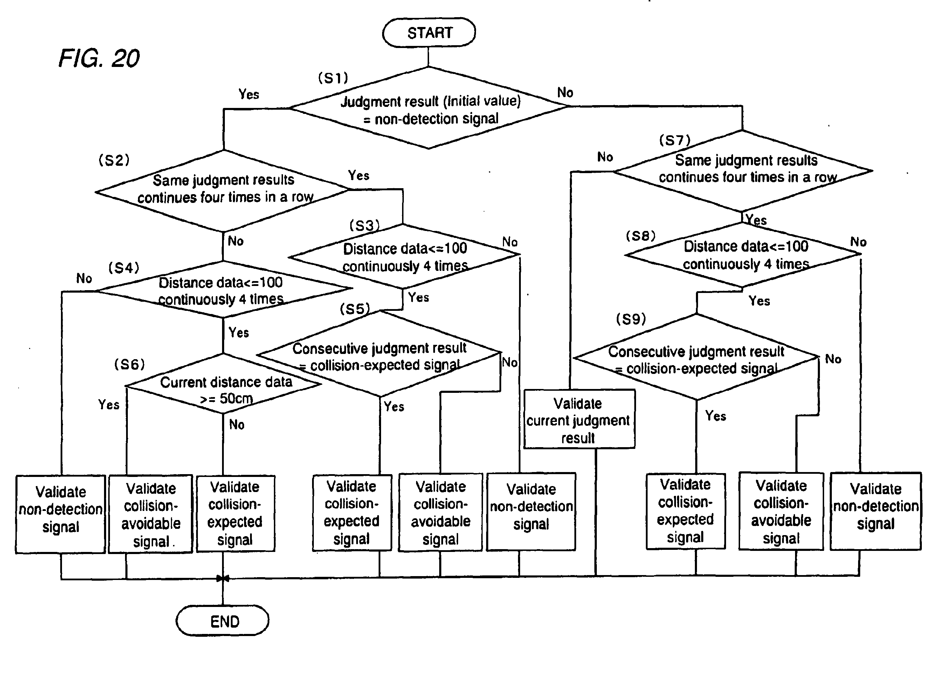

The collision-evaluating unit 44 has a memory, and stores a limited number of time series data of previous and current judgment results concerning the collision-expected signal, the collision-avoidable signal, and the non-detection signal, as well as stores a limited number of time series of previous and current distance data respectively associated with the judgment results. Specifically, the immediately previous judgment results (for example, immediately previous three consecutive judgment results) and the distance data associated with each of the previous judgment results are stored in the memory, and the collision judgment about the output of each obstacle sensor is executed using these data. The collision-evaluating unit 44 analyzes the current judgment result with reference to the immediately previous three consecutive judgment results and the distance data, in order to give following judgment modes for validating or correcting the current judgment result and updating the current judgment result as validated one and storing it into the memory. For this purpose; the collision-evaluating unit 44 executes the flowchart shown in FIG. 20

In FIG. 20, at first, when the current judgment result has not been obtained yet, the initial value of the judgment result is set to the non-detection signal (S1). If the current judgment result has been obtained, the current judgment result is checked whether it is the non-detection signal or not. In the next step S2 or S7, the current judgment result is checked whether it is identical to all the immediately previous three consecutive judgment results, with reference to the immediately previous three consecutive judgment results. Thereafter, in the next step S3, S4, or S8, consecutive distance data, for example, four consecutive distance data, are compared with a first distance (= 100cm). Furthermore, in some cases, four consecutive judgment results are checked whether they are the collision-expected signal or not in the next step S5 or S9, or the current distance data is compared with a second distance (= 50cm) in the step S6. In this way, the current judgment result is validated.

For example, when the current judgment result has not been obtained yet, or when the current judgment result is the non-detection signal, the judgment result is checked whether it is identical to all the immediately previous three consecutive judgment results (i.e., the same judgment results continues four times in a row) in the Step S2. If so, it is checked whether four consecutive distance data is all less than or equal to 100cm in the step S3, and if not so, the current judgment result is validated as the non-detection signal. If all the four consecutive distance data is less than or equal to the first distance (=100cm), the immediately previous three consecutive judgment results are checked whether they are the collision-expected signal or not in the step S5. Based on the result of the step S5, the current judgment result is validated. If the current judgment result is not identical to all the immediately previous three consecutive judgment results, it is checked, in the step 4, whether the current distance data and the immediately previous three consecutive distance data are all less than or equal to the first distance (=100cm), if not so, the current judgment result is validated as the non-detection signal. if the four consecutive judgment results are all less than or equal to the first distance (= 100cm), it is checked whether the current distance data is greater or equal to the second distance (= 50cm) in the step S6. Based on the result, the current judgment result is corrected to the collision-avoidable signal or the collision-expected signal, thereafter the current judgment result is validated.

When the current judgment result is the collision-expected signal or the collision-avoidable signal, the current judgment result is validated as a correct one unless the same judgment results continue four times in a row in the step S7. If the same judgment results continue four times in a row, it is checked whether the four consecutive distance data are all less than or equal to 100cm in the step S8. If not so, the current judgment result is corrected to the non-detection signal, and validated. The four consecutive distance data are all less than or equal to 100cm, the immediately previous three consecutive judgment results are checked whether they are the collision-expected signal in the step S9. Based on the result, the current judgment result is validated as the collision-expected signal or the collision-avoidable signal.

Hereinafter, a typical example of modes in which the judgment result is validated according to the above validation procedure will be shown.

a first mode; this mode validates the current judgment result as a correct one when the current judgment result is identical to all the previous judgment results stored in the memory (step S1→S7→S8→S9, or S1→S2→S3).

a second mode; this mode corrects the current judgment results to the collision-expected signal when all the following conditions are met;

1) the current judgment result is the non-detection signal (S1),
2) the judgment results of the same signal do not continue a first predetermined count (= 4 times)(S2),
3) the distance data less than or equal to the first distance (= 100cm) occur consecutively the first count (= 4 times) (S4), and
4) the current distance data is shorter than the the second distance (= 50cm) (S6).

a third mode; this mode corrects the current judgment result to the collision-avoidable signal when all the following condition are met;

1) the current judgment result is the non-detection signal(S1),
2) the judgment results of the same signal do not continue the first count (= 4 times) (S2),
3) the distance data less than or equal to the first distance (= 100cm) occur consecutively the second count (= 4 times), and
4) the current distance data is longer than the second distance (= 50cm) (S6).

a fourth mode; this mode corrects the current judgment results to the non-detection signal when all the following conditions are met;

1) the current judgment result is the non-detection signal (S1),
2) the judgment results of the same signal do not continue a first count (= 4 times) (S2), and
3) the distance data less than or equal to the first distance (= 100cm) do not occur consecutively the second count (= 4 times) (S4).

a fifth mode; this mode validates the current judgment result as correct one when all the following conditions are met;

1) the current judgment result is not the non-detection signal, and
2) the judgment results of the same signal do not continue a first count (= 4 times) (S7).

As mentioned above, because the current judgment result is validated after the continuity of the judgment results of each obstacle sensor at each time is checked, the alarm message can be issued based on that validated judgment result. Thereby, it becomes possible to issue the notification results which is stable against variation factors, such as variation in the detection precision of each obstacle sensor, variation in the detection position of the stationary obstacle caused by fluctuation of the obstacle sensors itself vibrated with the vehicle's vibration, and variation in the positional data caused by the sound noise. Therefore, stability and reliability of the system can be improved.

Also, when the validated current judgment result is the non-detection signal and the immediately previous judgment results do not continue the predetermined count (= 4 times in this embodiment) and the distance data are consecutively less than or equal to the first distance (= 100cm), such as the second mode or the third mode, the collision-expected condition or the collision-avoidable condition can be judged by comparing the newest distance data with the second distance (= 50cm).

Third embodiment:

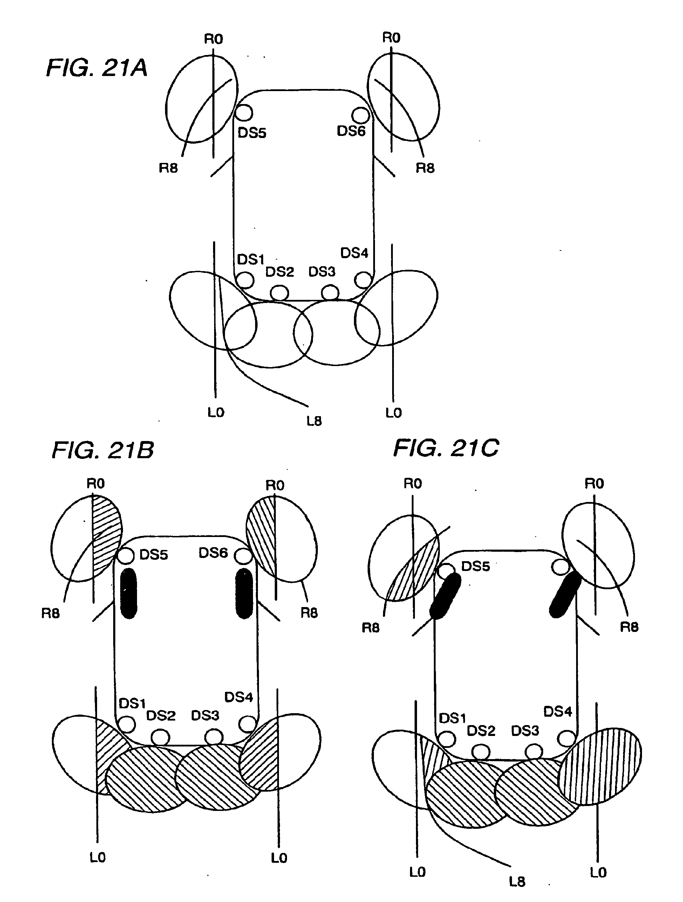

This embodiment is characterized by disposing the obstacle sensors DS1, DS2, DS3, and DS4 at the rear end of the vehicle, as shown in FIG. 21A. The procedure of the collision judgment is the same as the first embodiment, and the same parts in each embodiment are assigned the same reference number. These obstacle sensors are embedded at the right-and-left corner parts and at the right-and-left center parts of a rear bumper so that they will be symmetrical

17

with respect to the center longitudinal axis of the vehicle.

The judgment criterion generating unit sets the judgment lines L0 and L8 based on an intended traveling path, which is traced by the rear end of the vehicle and varies according to the steering angle. The judgment lines are spaced outwardly from the traveling path by a predetermined margin. The collision-evaluating unit analyzes the positional data of each obstacle sensor with reference to this judgment lines, and generates the collision-expected signal, collision-avoidable signal, or non-detection signal in the same way with the first embodiment. For example, as shown in FIG. 21 B, when the vehicle backs generally straight, the right-and-left two judgment lines L0 are selected, and if the positional data of an obstacle is detected within an area lying between the two judgment lines by any one of the obstacle sensors, the collision-expected signal is generated. As shown in FIG. 21C, in a case where the vehicle turns, if the positional data of an obstacle is detected within an area inside the judgment line L8, which is set in the outside of the turn according to the steering angle, by any one of the obstacle sensors, the collision-expected signal is generated. If the positional data is detected outside the judgment line L8 by any one of the obstacle sensors, the collision-avoidable signal is generated. If no obstacle is detected in the detection area of each obstacle sensor, the non-detection signal is generated.

Furthermore, in this embodiment, the same obstacle sensors DS5 and DS6 are installed at right-and-left corners of the front bumper of the vehicle. When the judgment criterion generating unit judges that the vehicle is backing, from the output of the direction detector, it gives an additional judgment line outside the vehicle, according to the traveling path which is traced when the vehicle backs. The additional judgment line extends from a position near to the front end of the vehicle to a predetermined distance back. For example, the additional judgment line R0, which is a line as the vehicle runs straight, extends on a same line as the above judgment line L0, and the additional judgment line R8, which is a line as the vehicle turns, is a curve changed according to the steering angle. When the collision-evaluating unit judges from the output of the direction detector that the vehicle is backing, the collision-evaluating unit gets not only the positional data from the obstacle sensors DS1-DS4 of the rear end, but also the positional data from the obstacle sensors DS5 and DS6 of the front end. And the collision-evaluating unit judges whether the front end of the vehicle will collide with the obstacle, with reference to the additional judgment line R0 or R8, based on the above mentioned procedure. Consequently, it is possible to make the collision judgment of the front end of the vehicle, which swells unexpectedly when the vehicle backs, thereby, the driver can back the vehicle safely.

Although only the judgment line L8 and the additional judgment line R8 are illustrated in the FIG. 21 as the judgment line as the vehicle turns, two or more judgment lines can be prepared according to the steering angle, like the first embodiment.

In addition, it is preferable to dispose four or more obstacle sensors at the front end of the vehicle and four or more obstacle sensors at the rear end of the vehicle, to make the collision judgment with obstacles when both moving forward and moving backward. In this case, the collision-evaluating unit and the judgment criterion generating unit are designed so that the positional data, obtained from the obstacle sensors at the right-and-left corner parts of the front end of the vehicle, can be judged based on judgment lines which differ between moving forward and moving backward.

Fourth embodiment:

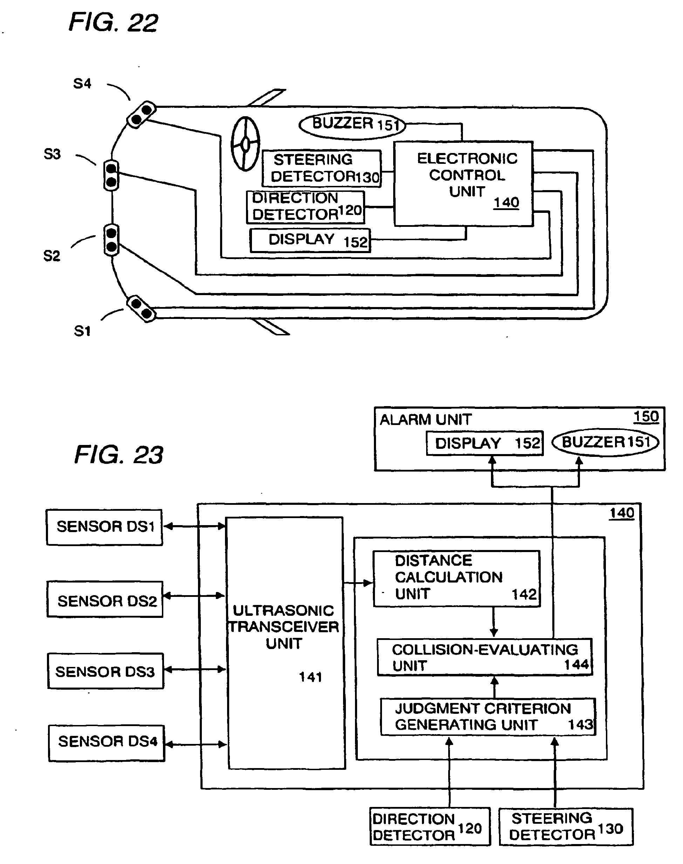

This embodiment is characterized by making the collision judgment using four obstacle sensors S1, S2, S3, and S4 which can detect only distance. As shown in FIG. 22, these obstacle sensors are installed in the front bumper of the vehicle like the first embodiment, and they are disposed symmetrically with respect to the center longitudinal axis of the vehicle. Two obstacle sensors S2 and S3 are disposed at the center part of the vehicle, with respect to the vehicle's width, and the remaining two obstacle sensors S1 and S4 are disposed at a width end corner parts of the vehicle. Each obstacle sensor is an ultrasonic sensor, having a limited detection area decided by a predetermined azimuth angle range and a predetermined detectable distance, and the detection area of each obstacle sensor is set equal. For example, as shown in FIG. 5, each detection area is a semicircular shape in a horizontal plane, whose azimuth angle is 180 degrees and effective detection distance is 100cm. Each obstacle sensor gives an output indicative of a distance to the obstacle detected in this detection area.

FIG. 23 shows a system of this embodiment. This system includes a direction detector 120, which detects a running direction of the vehicle, and a steering detector 130, which detects a steering angle of the vehicle, like the first embodiment. The output of the obstacle sensors S1-S4, the direction detector 120, and the steering detector 130 are sent to an electronic control unit 140.

The electronic control unit 140 includes a ultrasonic signal transceiver unit 141, a distance calculation unit 142 for calculating a distance to an obstacle, a judgment criterion generating unit 143 for making a judgment criterion for a collision judgment, and a collision-evaluating unit 144 for judging a possibility that the vehicle might collide with the detected obstacle, by checking the distance of the obstacle with the judgment criterion.

The ultrasonic transceiver unit 141 makes each obstacle sensor send a ultrasonic signal regularly, and receives the reflection signal indicative of the reflected wave from the detected obstacle.

The position calculation unit 142 processes the reflected signal, and then gives a distance data to the obstacle detected by the obstacle sensor. If the reflected signal came from obstacles which is a predetermined distance away from each obstacle sensors S1-S4 ( in this case, the predetermined distance = 100cm), the position calculation unit 142 regards the reflected wave as invalid. An effective detection distance is set to 100cm or less. If the detection distance to the detected obstacles turns out to be "longer than 100cm", the position calculation unit 142 gives the distance data indicating that no obstacle exist.

The judgment criterion generating unit 143 receives the output from the direction detector 120 and the steering detector 130, i.e., the running direction of the vehicle and the steering angle, and determines an intended traveling path followed by the vehicle, and then gives the judgment criterion specific to the determined traveling path.

The judgment criterion is made according to the traveling path that varies by the steering angles. For example, in a case where the vehicle turns right when it is moving forward, the judgment criterion is set for each detection area to cover an area inside the judgment line L0-L8. Each judgment line L0-L8 is spaced outwardly by a predetermined margin, for example, 25cm, from a line which is expected that the front left corner of the vehicle will follow according to the steering angle. That is, a radius R, which defines predetermined range in the detection area located inside the judgment line, is set as the judgment criterion for each detection area.

The judgment criterion generating unit 143 memorizes the judgment criterions varying according to the steering angle in a table. An example of the judgment criterions (= radius), which is set for each detection area of each obstacle sensor according to the steering angle, is shown in the following table 3. Although, In this table, the judgment criterions used only when the vehicle runs straight and turns right are shown, the judgment criterion used when the vehicle turns left is just symmetry with the judgment criterion as the vehicle turns right, and is omitted.

Table 3

| Steering angle (θ) | | Judgment criterion (radius R) | | | | Judgment line |
|---|---|---|---|---|---|---|
| Left turn : positive | | Sensor | | | | |
| Right turn : negative | | S1 | S2 | S3 | S4 | |
| | θ ≤ -630° | R ≤ 25cm | R ≤ 63cm | R ≤ 100cm | R ≤ 100cm | L8 |
| | -630° < θ ≤ -180° | R ≤ 25cm | R ≤ 100cm | R ≤ 100cm | R ≤ 100cm | L2 |
| | -180° < θ ≤ 180° | R ≤ 32cm | R ≤ 100cm | R ≤ 100cm | R ≤ 32cm | L0 |

For example, in a case where the steering angle is maximum and the judgment line L8 is selected, as for the sensor S1 which is the nearest to the judgment line L8, the radius R is set to "25cm" as the judgment criterion, which draws a circular arc touching the judgment line L8. As for the sensor S2, which is the second nearest to the judgment line L8, the radius R is set to "63cm", which draws a circular arc touching the judgment line L8. As for the sensor S3, the radius R is set to "100cm", which draws a circular arc touching the judgment line L8. As for the sensor S4, whose detection area is inside the judgment line L8 but does not touch the judgment line, the radius R is set to "100cm", which is a default radius. That is, as for the sensor whose detection area is intersected by the selected judgment line, the judgment criterion is calculated as a radius which draws a circular arc touching the judgment line in the detection area, and as for the sensor which is away from the judgment line toward the inside of the turn, the judgment criterion is set to a default radius (= 100cm).

The collision-evaluating unit 144 refers to the judgment criterion which is selected according to the steering angle, and generates the collision-expected signal if the distance data from any one of the obstacle sensors satisfies the condition shown in the table 3. When any one of the obstacle sensors detects an obstacle in the detection area under a condition where the collision-expected signal is not generated, the collision-evaluating unit 44 generates the collision-avoidable signal. When no obstacle sensor detects an obstacle in the detection area, the collision-evaluating unit 44 generates the non-detection signal.

The collision-evaluating unit 144 operates an alarm unit 150 according to the judgment result (i.e., above these signals), and gives a predetermined alarm message to the driver, like the first embodiment.

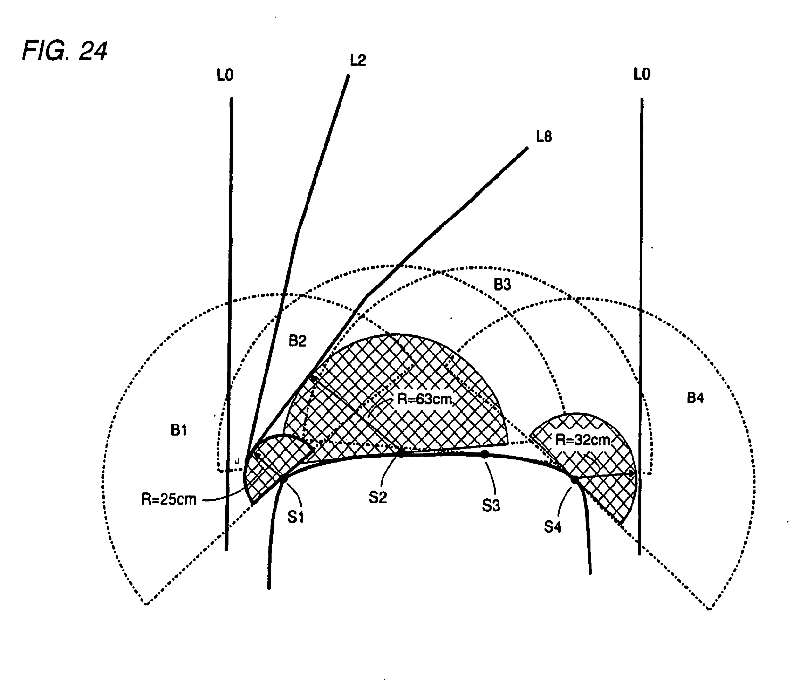

The default radius of the detection area of each obstacle sensor (in this embodiment, 100cm) can be changed according to a model of the vehicle or the installation position of the sensor. The default radius of the detection area is determined according to the judgment line, which is set by adding a predetermined margin to the intended traveling path determined for each model of vehicle beforehand, in consideration of the installation position of the sensor. Specifically, when two in four sensors are disposed at the right-and-left center parts and the remain two in four sensors are disposed at the right-and-left corner parts, as shown in the FIG. 24, the radius of the detection area is set so that it satisfies the following conditions.

(1) Between the two center part sensors S2 and S3, which are inside the judgment line L8 as the steering angle is maximum, the boundary of the detection area of the sensor S3, which is near to the inside of the turn, touches the judgment line L8.

(2) The boundary of the detection area of the center part sensors S2 and S3, which is inside the judgment line L0 as the vehicle runs straight, touches the judgment line L0.

(3) Parts of the judgment line L0 and L8 are included in the detection area of the corner part sensors S1 and S4.

Although, in the table 3, the range of the steering angle from the angle as the vehicle runs straight to the angle as the vehicle turns right is classified into three, as an example, in order to make an understanding of the present invention easy, this invention is not limited to this example. It is possible to classify the angle range more and give each classified angle range the judgment criterion (radius) in the detection area of each sensor. Furthermore, a radius which varies continuously according to the sheering angle change can be set in the detection area of the obstacle sensor. In this case, the judgment criterion generating unit 143 may have a expression for the judgment line. The expression is made according to the detected steering angle based on the intended traveling path, which has been prepared beforehand for each model of vehicles. The judgment criterion generating unit has a function to calculate the judgment criterion from the expression.

Furthermore, the collision-evaluating unit 144 checks the distance data from the obstacle sensors with the judgment criterion in different order according to a steering angle, and makes the collision judgment. In a case where the vehicle runs straight (-180° < the steering angle ($\theta$) < 180°), first, the collision-evaluating unit makes the collision judgment based on the distance data from the right-and-left center parts sensors S2, S3, then it makes the collision judgment based on the distance data from the right-and-left corner parts sensors S1, S4. In a case where the vehicle turns, first, the collision-evaluating unit makes the collision judgment based on the distance data from the obstacle sensor located nearest to the inside of the turn, and successively it makes the collision judgment based on the distance data from the obstacle sensor located nearer to the outside of the turn (i.e., S4→S3→S2→S1 or S1→S2→S3→S4), so that it can make the collision judgment at an early stage with an obstacle located in the inside of the turn, where it is apt to become a driver's blind spot.

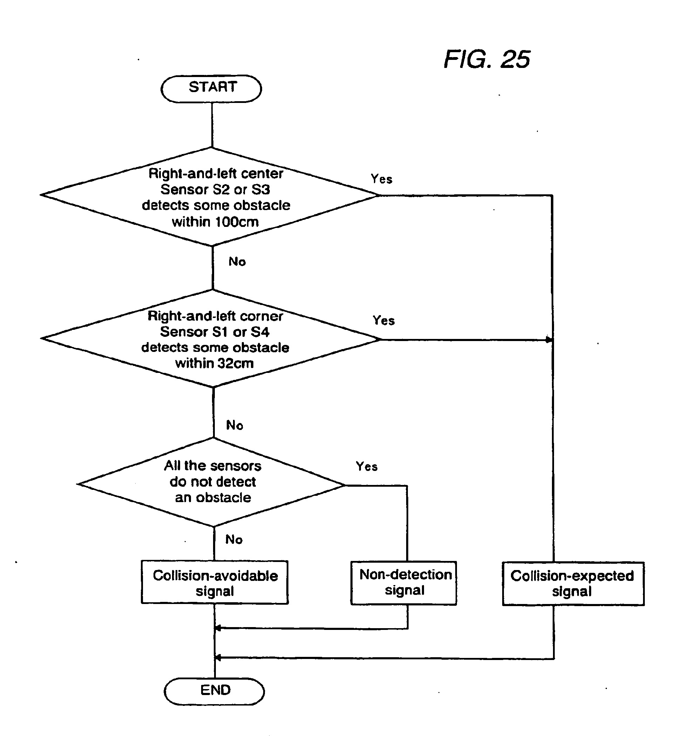

Hereinafter, the operation of this embodiment will be described with reference to FIG. 25-30.

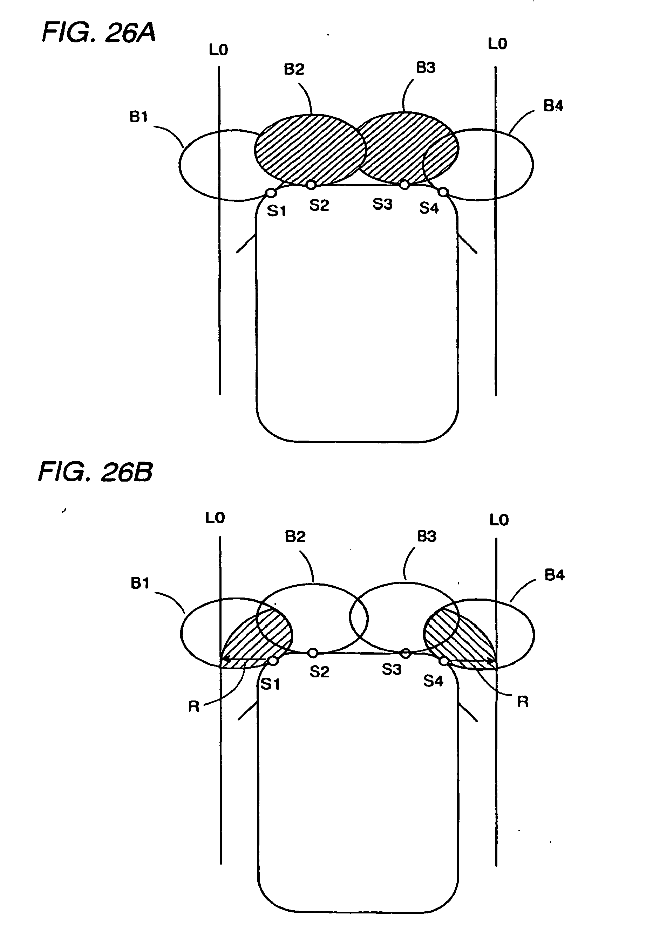

FIG. 25 is a flow char showing a procedure of the collision judgment as the vehicle runs straight. In this case, two judgment lines L0 L0, which run both sides of the vehicle, are selected, as shown in FIG. 26. First, the collision-evaluating unit 144 checks whether the right-and-left center parts sensors S2, S3 detect an obstacle in the corresponding detection area (i.e., the detection area B2, B3 shown by hatching in FIG. 26A). If an obstacle is detected, the collision-evaluating unit generates the collision-expected signal. If no obstacle is detected in these detection areas B2, B3, then the collision-evaluating unit 144 checks whether an obstacle is detected in ranges (shown by hatching in FIG. 26B) defined by a predetermined radius R (in this embodiment, R = 32cm) within the detection area B1, B4 of the right-and-left corner parts sensors S1, S4. If an obstacle is detected, the collision-evaluating unit generates the collision-expected signal. If no obstacle is detected in these ranges, then the collision-evaluating unit 144 checks whether any one of the sensors S1-S4 detects an obstacle in all the detection area (the radius = 100cm), that is, an obstacle is detected within the detection area B1,B4. If any obstacle is detected in these area, the collision-evaluating unit generates the collision-avoidable signal. Otherwise, it generates the non-detection signal.

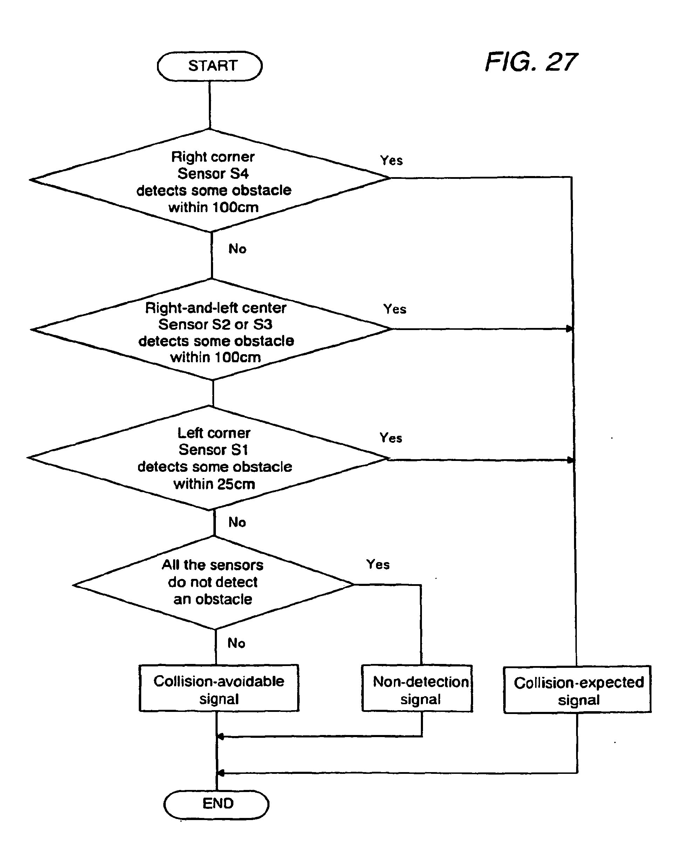

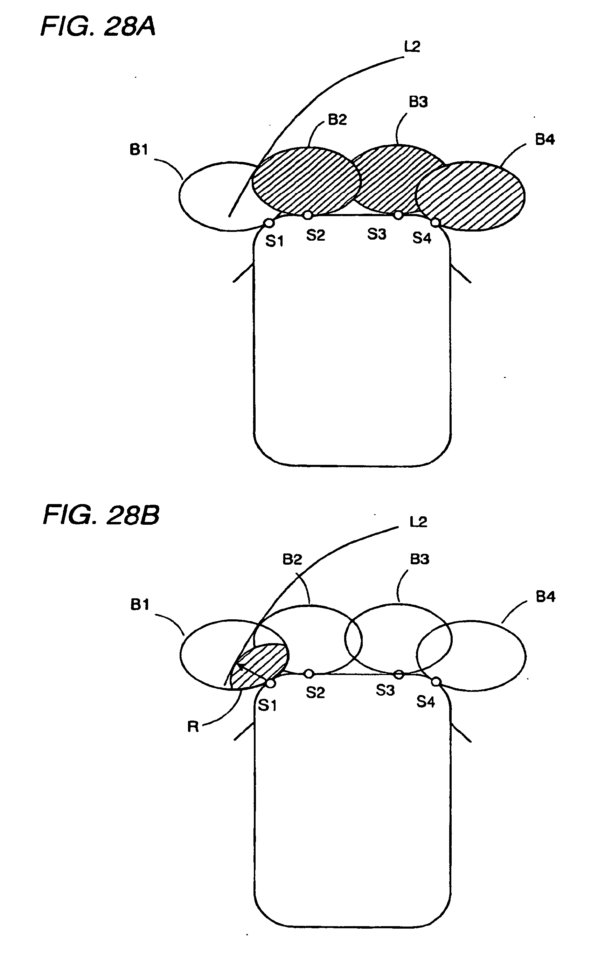

FIG. 27 is a flow chat showing a procedure of the collision judgment as the vehicle turns right with comparatively gentle steering angle (-630° < $\theta \leq$ -180°). In this case, the judgment line L2 is selected, as shown in FIG. 28. First, the collision-evaluating unit 144 checks whether an obstacle is detected within the detection area B4 (shown by hatching in FIG. 28A) of the sensor S4 at the right corner part, which is nearest to the inside of turn, and successively, it checks whether an obstacle is detected within the detection areas B3, B2 of the right-and-left center sensors S3,S2, and then, it checks whether an obstacle is detected within a range (shown by hatching in FIG. 28B) defined by a predetermined radius R ( in this embodiment, R = 25cm) in the detection area B1 of the sensors S1, which is at the left corner part and is nearest to the outside of turn. When an obstacle is detected in any one of the detection areas or range, the collision-evaluating unit 144 generates the collision-expected signal. Otherwise, the collision-evaluating unit checks whether an obstacle is detected within the detection area B1 of the sensor S1, and if no obstacle is detected, then the collision-evaluating unit judges no obstacle is detected in the detection area of all sensors, and generates the non-detection signal. If an obstacle is detected in the detection area B1 of the sensor S1, the collision-evaluating unit generates the collision-avoidable signal.

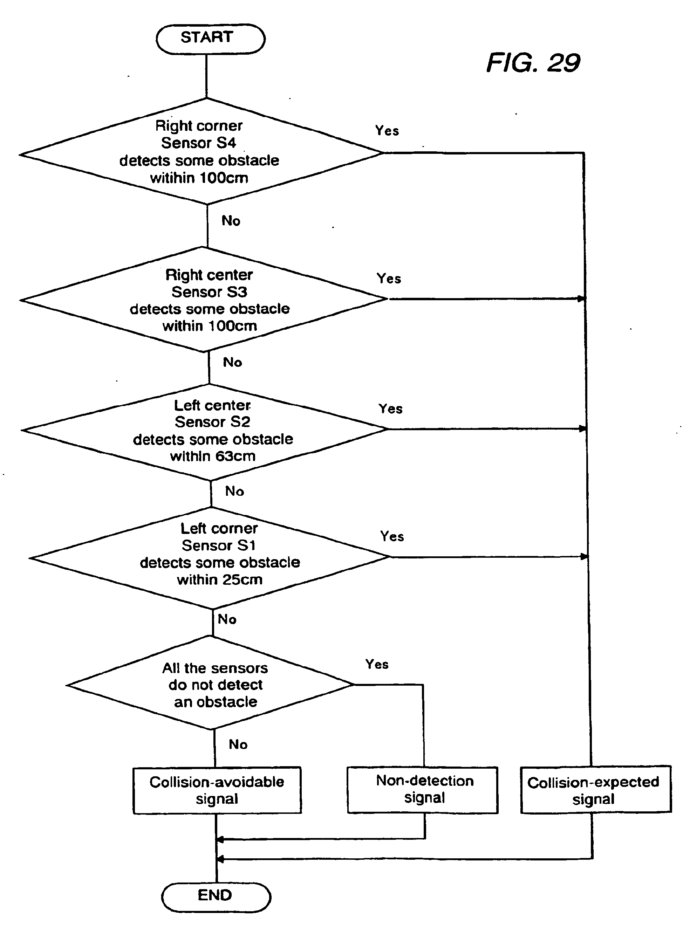

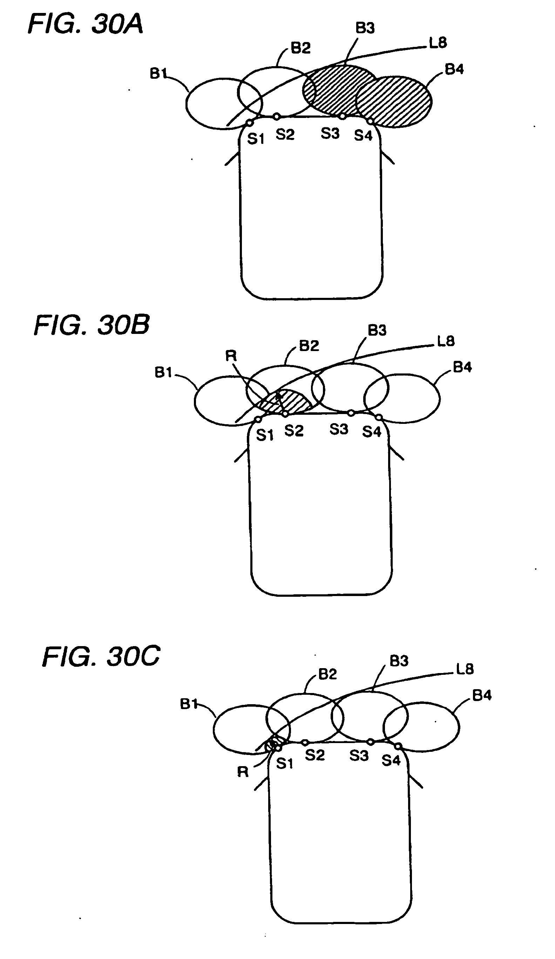

FIG. 29 is a flow chart as the vehicle turns right with maximum steering angle ($\theta \leq$ -630°). In this case, the judgment line L8 is selected as shown in FIG. 30. First, the collision-evaluating unit 144 checks whether an obstacle is detected within the detection area B4 (shown by hatching in FIG. 30A) of the sensor S4 at the right corner part, which is nearest to the inside of turn. And then, the collision-evaluating unit checks whether an obstacle is detected within the detection areas B3 (shown by hatching in FIG. 30A) of the right-hand center sensor S3, and successively, it checks whether an obstacle is detected within a range (shown by hatching in FIG. 30B) defined by a predetermined radius R

( in this embodiment, R = 63cm) in the detection area B2 of the left-hand center sensors S2, and then, it checks whether an obstacle is detected within a range (shown by hatching in FIG. 30C) defined by a predetermined radius R ( in this embodiment, R = 25cm) in the detection area B1 of the sensors S1, which is at the left corner part and is the nearest to the outside of turn. When an obstacle is detected in any one of the detection areas or ranges, the collision-evaluating unit generates the collision-expected signal. Otherwise, the collision-evaluating unit checks whether an obstacle is detected within the detection area B2 of the sensor S2 or the detection area B1 of the detection sensor S1, and if no obstacle is detected in any one of these detection areas B1, B2, then it judges no obstacle is detected In the detection area of all sensors, and generates the non-detection signal. If an obstacle is detected in the detection area B1 or B2, the collision-evaluating unit generates the collision-avoidable signal.

As shown in the above flow chart, at the point in time when any signal, i.e., the collision-expected signal, the collision-avoidable signal, or the non-detection signal, is generated, one routine of the collision judgment ends. And this routine will be repeated.

Also, like the first embodiment explained with reference to the FIG. 11, the judgment criterion generating unit 143 may set an additional judgment line Lx' inside the turn in consideration of the difference of traveling path between a front wheel and a rear wheel, and the collision-evaluating unit 44 may generate the collision-expected signal when any obstacle is detected within a range which lies between both right-and-left judgment lines Lx, Lx'.

Although this embodiment showed the example in which four obstacle sensors are used, the present invention is not necessarily limited only to such an example and can use arbitrary numbers of obstacle sensors if needed. For example, in a case where only one obstacle sensor is used, it is preferable to use a sensor which can detect comparatively long distance. Thereat, all the judgment lines, which vary according to the steering angle, are designed to touch or cross this detection area. The judgment criterion generating unit 143 is designed so that it can vary the radius, which defines a range touching the judgment line running in the detection area, according to the steering angle. That is, the judgment criterion generating unit 143 gives a radius as the judgment criterion according to the steering angle. In this case, the collision-evaluating unit is designed so that it can generate the collision-expected signal when some obstacle is detected in the range defined by the radius which is determined by the steering angle, and it can generate the collision-avoidable signal when some obstacle is detected in the detection area which is outside the radius, and it can generate the non-detection signal when no obstacle is detected in the detection area.

Although this embodiment showed the example in which the ultrasonic sensor is used as a obstacle sensor, this invention is not necessarily limited only to such an example, and can use arbitrary sensors as far as they can detect a distance to an obstacle or a position of the obstacle. For example, an electromagnetic sensor using laser, microwave, or millimetric-wave, or an ultrasonic sensor array can be used.

**Claims**

1. An obstacle detecting and alarming system for a wheeled vehicle, said system comprising:

   at least one obstacle sensor (DS1, DS2, DS3, DS4) adapted to be located at a front or rear end of said vehicle, said obstacle sensor (DS1, DS2, DS3, DS4) having a detection area (A1, A2, A3, A4) of limited detection angle within which an object adjacent said vehicle can be detected, said obstacle sensor (DS1, DS2, DS3, DS4) providing at least distance data indicative of a distance to the detected obstacle,
   a direction detector (20) which detects a running direction of said vehicle,
   a steering detector (30) which monitors a steering angle of said vehicle,
   an alarm means (50) which issues an alarm message informing an expected influence of the detected obstacle on said vehicle,
   wherein
   said system includes a judgment criterion generating means (43) which analyzes said running direction and said steering angle to determine an intended traveling path followed by said vehicle and to provide a judgment criterion specific to said determined traveling path and varying with varying steering angle,
   said system includes a collision-evaluating means (44) which generates a collision-expected signal when said distance data satisfy said judgment criterion within said detection area (A1, A2, A3, A4), generates a collision-avoidable signal when said distance data does not satisfy said judgment criterion within said detection area (A1, A2, A3, A4), and
   said alarm means (50) issues said alarm message indicative of a collision-expected condition and a collision-avoidable condition respectively in response to said collision-expected signal and said collision-avoidable signal
   **characterized in that**
   said judgment criterion generating means (43) is adapted to provide said judgment criterion in terms of a judgment line (L00 to L8) spaced outwardly by a predetermined margin from a travelling path which one width end of the vehicle is expected to follow, said judgment line (L00 to L8) and said predetermined margin varying with the varying steering angle.

2. The system as set forth in claim 1, wherein
said obstacle sensor (DS1, DS2, DS3, DS4) is configured as a two-dimensional sensor which gives positional data including a direction to the detected obstacle, said judgment criterion generating means (43) providing said judgment criterion which is defined by a set of first coordinate values in a two-dimensional coordinate plane extending generally horizontally around said vehicle, said first coordinate values varying in accordance with the steering angles to trace, within said two-dimensional coordinate plane, at least one judgment line (L00 to L8) which runs generally parallel to and spaced by a predetermined margin from said intended traveling path,
said collision-evaluating means (44) generating said collision-expected signal when the positional data is inside of said judgment line (L00 to L8) within said detection area (A1, A2, A3, A4), and generating said collision-avoidable signal when the positional data is outside of said judgment line (L00 to L8) within said detection area (A1, A2, A3, A4).

3. The system as set forth in claim 2, wherein
a plurality of said obstacle sensors (DS1, DS2, DS3, DS4) are spaced along a width of said vehicle,
said judgment criterion generating means (43) providing said judgment line (L00 to L8) which intersects with said detection area (A1, A2, A3, A4) defined by at least one of said obstacle sensors (DS1, DS2, DS3, DS4),
said collision-evaluating means (44) generating said collision-expected signal when the positional data from any one of said obstacle sensors (DS1, DS2, DS3, DS4) is inside of said judgment line (L00 to L8) and within the detection area (A1, A2, A3, A4) of the corresponding obstacle sensor (DS1, DS2, DS3, DS4), and generating said collision-avoidable signal when the positional data from any one of said obstacle sensors (DS1, DS2, DS3, DS4) is outside of said judgment line (L00 to L8) and within the detection area (A1, A2, A3, A4) of the corresponding obstacle sensor (DS1, DS2, DS3, DS4).

4. The system as set forth in claim 2 or 3, wherein
said judgment criterion generating means (43) provides a pair of said judgment lines (L0; L00) running on both sides of said vehicle when said steering angle is within a small angle indicative of that said vehicle is running straight.

5. The system as set forth in claim 2, 3, or 4, wherein
said judgment criterion generating means (43) provides a pair of said judgment lines (L00 to L8), one extending outside of the turn and the other extending inside of the turn when said steering angle exceeds a predetermined large angle indicative of that said vehicle is turning.

6. The system as set forth in claim 3, wherein
said obstacle sensors (DS1, DS2, DS3, DS4) are disposed symmetrically with respect to a center longitudinal axis of said vehicle.

7. The system as set forth in claim 6, wherein
four said obstacle sensors (DS1, DS2, DS3, DS4) are disposed with two of said obstacle sensors (DS1, DS4) located at the width end corners, respectively.

8. The system as set forth in claim 7, wherein
said collision-evaluating means (44) analyzes time series data of said positional data from each one of said obstacle sensors (DS1, DS4) located at the width end corners to determine whether or not the obstacle is approaching the vehicle relatively toward the vehicle from point to point outside of said judgment line (L00 to L8), and generates said collision-expected signal when the obstacle is determined to be so approaching.

9. The system as set forth in claim 2, wherein
said collision-evaluating means (44) determines an angle-detection failure condition when said positional data is accompanied only with a distance data and not with an angle data, and generates said collision-expected signal when said distance data is shorter than a predetermined threshold distance upon determination of said angle-detection failure condition.

10. The system as set forth in claim 3, wherein
said collision-evaluating means (44) determines an angle-detection failure condition when the positional data is accompanied only with a distance data and not with an angle data, and generates said collision-expected signal when said distance data is shorter than a predetermined threshold distance upon determination of said angle-detection failure condition,
said threshold distance of different values being assigned to different ones of said obstacle sensors (DS1, DS2, DS3, DS4) in a predetermined pattern determined by the steering angle.

**11.** The system as set forth in claim 2, wherein
said collision-evaluating means (44) analyzes time series data of said positional data from said obstacle sensors (DS1, DS2, DS3, DS4) and determines an angle-indefinite condition when said time series data show that a variation in the detected angle exceeds a predetermined value,
said collision-evaluating means (44) deriving the distance data from the obstacle sensor (DS1, DS2, DS3, DS4) causing said angle-indefinite condition, and generating said collision-expected signal when said distance data is shorter than a predetermined threshold distance,
said threshold distance of different values being assigned to different ones of said obstacle sensors (DS1, DS2, DS3, DS4) in a predetermined pattern determined by the steering angle.

**12.** The system as set forth in claim 3, wherein
said collision-evaluating means (44) analyzes time series data of said positional data from said obstacle sensors (DS1, DS2, DS3, DS4) and determines an angle-indefinite condition when said time series data show that a variation in the detected angle exceeds a predetermined value,
said collision-evaluating means (44) deriving the distance data from the obstacle sensor (DS1, DS2, DS3, DS4) causing said angle-indefinite condition, and generating said collision-expected signal when said distance data is shorter than a predetermined threshold distance,
said threshold distance of different values being assigned to different said obstacle sensors (DS1, DS2, DS3, DS4) in a predetermined pattern determined by the steering angle.

**13.** The system as set forth in any one of claims 9 to 12, wherein
said collision-evaluating means (44) generates said collision-avoidable signal when said distance data exceeds said threshold distance within a radius defining any one of said detection area (A1, A2, A3, A4).

**14.** The system as set forth in claim 2 or 3, wherein
said judgment criterion generating means (43) gives a number of stringent coordinate values that trace a stringent judgment line (L00, L1, L2, L5, L7) running generally parallel to said judgment line (L0, L2, L4, L6, L8) and spaced outwardly thereof with respect to the vehicle,
said collision-evaluating means (44) generating said collision-expected signal when said positional data from any one of said obstacle sensors (DS1, DS2, DS3, DS4) is inside of said stringent judgment line(L00, L1, L3, L5, L7) once after said collision-expected signal is generated with reference to said judgment line (L0, L2, L4, L6, L8).

**15.** The system as set forth in claim 2 or 3, wherein
each of said obstacle sensors (DS1, DS2, DS3, DS4) defines a short-distance range and a long-distance range within an effective detection area given to said obstacle sensor (DS1, DS2, DS3, DS4),
said collision-evaluating means (44) determines a near-obstacle condition when said positional data from any one of said obstacle sensors (DS1, DS2, DS3, DS4) comes within said short-distance range,
said collision-evaluating means (44) allowing said alarm means (50) to issue said alarm message only upon acknowledgement of said near-obstacle condition.

**16.** The system as set forth in claim 2 or 3, wherein
said at least one obstacle sensor (DS1, DS2, DS3, DS4) is disposed at the rear end of said vehicle, and two additional obstacle sensors (DS5, DS6) are located respectively at the front end corners of said vehicle, each of said additional obstacle sensors (DS5, DS6) having a detection area and providing positional data of the obstacle,
said judgment criterion generating means (44) providing a set of additional coordinate values that vary in accordance with the steering angle to trace, within said two-dimensional coordinate plane, an additional judgment line (R0, R8) which runs outside of a traveling path that the front end corner of said vehicle traces in its reverse movement,
said collision-evaluating means (44), upon acknowledging from the output of said direction detector (20) that said vehicle is backing, generates said collision-expected signal when the positional data from any one of said additional obstacle sensors (DS5, DS6) is inside of said additional judgment line (R0, R8) within the corresponding detection area, and generating said collision-avoidable signal when the positional data from each of said additional obstacle sensors (DS5, DS6) is outside of said additional judgment line (R0, R8) and at the same time when the positional data from any one of said additional obstacle sensors (DS5, DS6) is within the detection area given to the associated additional obstacle sensor (DS5, DS6).

**17.** The system as set forth in claim 2 or 3 wherein
said collision-evaluating means (44) generates a non-detection signal when said positional data of the obstacle is outside of said detection area (A1, A2, A3, A4), said collision-evaluating means (44) having a memory for storing a limited number of time series data of previous and current judgment results concerning said collision-expected signal, said collision-avoidable signal, and said non-detection signal, as well as for storing a limited number of time series of previous and current distance data respectively associated with said judgment results,
said collision-evaluating means (44) analyzing the current judgment result with reference to said previous judgment results and said distance data in order to give different modes for validating or correcting said current judgment result and updating said current judgment result as validated one and storing it into said memory,
said different modes including:

a first mode for validating said current judgment result as a correct one when said current judgment result is identical to all the previous judgment results stored in said memory;
a second mode for correcting said current judgment result to said collision-expected signal when all the following conditions are met

1) said current judgment result is said non-detection signal,
2) judgment results of the same signal do not continue a first predetermined count,
3) said distance data less than or equal to a first predetermined distance occur consecutively a second count; and
4) said current distance data is shorter than a second predetermined distance;

a third mode for correcting said current judgment result to said collision-avoidable signal when all the following conditions are met:

1) said current judgment result is said non-detection signal,
2) judgment results of the same signal do not continue said first predetermined count,
3) said distance data less than or equal to said first predetermined distance occur consecutively said second count, and
4) said current distance data is longer than said second predetermined distance;

a fourth mode for validating said current judgment result as said non-detection signal when all the following conditions are met

1) said current judgment result is said non-detection signal,
2) judgment results of the same signal do not continue a first predetermined count, and
3) said distance data less than or equal to said first predetermined distance do not occur consecutively said second count;

a fifth mode for validating said current judgment result as correct one when all the following conditions are met

1) said current judgment result is not said non-detection signal, and
2) all said stored judgment results are not identical to one another.

**18.** The system as set forth in claim 1, wherein
said alarm means (50) provides a visual indication for notifying a steering direction for avoiding the collision when said collision-avoidable signal is issued from said collision-evaluating means (44).

**19.** The system as set forth in claim 1 or 18, wherein
said alarm means (50) provides a visual indication for notifying a recommended minimum steering angle with which the vehicle can avoid the collision with the detected object when said collision-avoidable signal is issued from said collision-evaluating means (44).

**20.** The system as set forth in any one of claims 1 to 3, wherein
said collision-evaluation means (44) generates a start signal when the positional data from any one of said obstacle sensors (DS1, DS2, DS3, DS4) comes first within a predetermined distance from said vehicle,
said alarm means (50) providing audible information in response to said start signal, notifying that the system becomes ready for providing said alarm message.

**21.** The system as set forth in claim 1, wherein
said judgment criterion generating means (43) provides a set of coordinate values in a two-dimensional coordinate plane extending generally horizontally around said vehicle, said coordinate values varying in accordance with the steering angles to trace, within said two-dimensional coordinate plane, at least one judgment line (L00, to L8) which runs generally parallel to and spaced by a predetermined margin from said traveling path,
said judgment criterion generating means (43) providing said judgment criterion as including a first radius defining said detection area and a second radius defining a detection range that touches said judgment line (L00 to L8) within said at least one said detection area,
said collision-evaluating means (44) generating said collision-expected signal when the distance data from said at least one obstacle sensor (DS1, DS2, DS3, DS4) is within said second radius, and generating said collision-expected signal when said distance data from said at least one obstacle sensor (DS1, DS2, DS3, DS4) exceeds said second radius but within said first radius.

**22.** The system as set forth in claim 21, wherein
a plurality of said obstacle sensors (DS1, DS2, DS3, DS4) are spaced along a width of said vehicle,
said judgment criterion generating means (43) providing said judgment line (L00 to L8) which intersects said detection area (A1, A2, A3, A4) defined by at least one of said obstacle sensors (DS1, DS2, DS3, DS4),
said collision-evaluating means (44) generating said collision-expected signal when the distance data from said at least one obstacle sensor (DS1, DS2, DS3, DS4) is within said second radius, and generating said collision-avoidable signal when said distance data from every said obstacle sensor (DS1, DS2, DS3, DS4) exceeds said second radius and at the same time the distance data from any one of the obstacle sensors (DS1, DS2, DS3, DS4) is within said first radius.

**23.** The system as set forth in claim 22, wherein
said judgment criterion generating means (43) makes said second radius equal to said first radius for said detection range belonging to one or more of said obstacle sensors (DS1, DS2, DS3, DS4) that said judgment line (L00 to L8) does not intersect.

**24.** The system as set forth in claim 21, wherein
said collision-evaluating means (44) generates said collision-expected signal when the distance detected by one of said obstacle sensors (DS1, DS2, DS3, DS4) adjacent to the inside of the turn is less than a predetermined distance.

**25.** The system as set forth in claim 3 or 22, wherein
said collision-evaluating means (44) examines the data firstly from the sensor (DS1, DS2, DS3, DS4) located nearest to the inside of turn and successively from the obstacle sensor (DS1, DS2, DS3, DS4) located nearer to the outside of turn of said vehicle.

**Patentansprüche**

**1.** Hindernisdetektions- und -warnsystem für ein Fahrzeug mit Rädern, mit:

mindestens einem Hindernissensor (DS1, DS2, DS3, DS4), der so eingerichtet ist, dass er an einem vorderen oder hinteren Teil des Fahrzeugs angeordnet werden kann, und der einen Detektionsbereich (A1, A2, A3, A4) mit einem begrenzten Detektionswinkel hat, in dem ein sich neben dem Fahrzeug befindendes Objekt detektiert werden kann, wobei der Hindernissensor (DS1, DS2, DS3, DS4) zumindest Abstandsdaten bereitstellt, die einen Abstand von dem detektierten Hindernis angeben;
einem Richtungsdetektor (20), der eine Fahrtrichtung des Fahrzeugs detektiert;
einem Lenkungsdetektor (30), der einen Lenkungswinkel des Fahrzeugs überwacht; und
Warnmitteln (50), die eine Warnmeldung ausgeben, die über einen erwarteten Einfluss des detektierten Hindernisses auf das Fahrzeug informiert,

wobei

das System Beurteilungskriterium-Erzeugungsmittel (43) aufweist, die die Fahrtrichtung und den Lenkungswinkel analysieren, um einen geplanten Fahrtweg zu ermitteln, dem das Fahrzeug folgt, und um ein Beurteilungskriterium bereitzustellen, das für den ermittelten Fahrtweg spezifisch ist und sich mit dem Lenkungswinkel ändert, das System Kollisionsbewertungsmittel (44) aufweist, die ein Kollision-erwartet-Signal erzeugen, wenn die Abstandsdaten das Beurteilungskriterium in dem Detektionsbereich (A1, A2, A3, A4) erfüllen, und ein Kollision-vermeidbar-Signal erzeugen, wenn die Abstandsdaten das Beurteilungskriterium in dem Detektionsbereich (A1, A2, A3, A4) nicht erfüllen, und

die Warnmittel (50) in Reaktion auf das Kollision-erwartet-Signal und das Kollision-vermeidbar-Signal die Warnmeldung ausgeben, die einen Kollision-erwartet-Zustand bzw. einen Kollision-vermeidbar-Zustand angibt,

**dadurch gekennzeichnet, dass**

die Beurteilungskriterium-Erzeugungsmittel (43) so eingerichtet sind, dass sie das Beurteilungskriterium in Form einer Beurteilungslinie (L00 bis L8) bereitstellen, die nach außen einen vorgegebenen Abstand von einem Fahrtweg hat, dem eine Breitseite des Fahrzeugs voraussichtlich folgen wird, wobei sich die Beurteilungslinie (L00 bis L8) und der vorgegebene Abstand mit dem Lenkungswinkel ändern.

2. System nach Anspruch 1, **dadurch gekennzeichnet, dass** der Hindernissensor (DS1, DS2, DS3, DS4) als ein zweidimensionaler Sensor konfiguriert ist, der Positionsdaten erzeugt, die eine Richtung zu dem detektierten Hindernis beinhalten,
wobei
die Beurteilungskriterium-Erzeugungsmittel (43) das Beurteilungskriterium bereitstellen, das von einer Gruppe von ersten Koordinatenwerten in einer zweidimensionalen Koordinatenebene definiert wird, die im Großen und Ganzen horizontal um das Fahrzeug verläuft, wobei sich die ersten Koordinatenwerte entsprechend den Lenkungswinkeln ändern, um in der zweidimensionalen Koordinatenebene mindestens eine Beurteilungslinie (L00 bis L8) zu verfolgen, die im Großen und Ganzen parallel zu dem geplanten Fahrtweg und in einem vorgegebenen Abstand davon verläuft, und
die Kollisionsbewertungsmittel (44) das Kollision-erwartet-Signal erzeugen, wenn die Positionsdaten innerhalb der Beurteilungslinie (L00 bis L8) in dem Detektionsbereich (A1, A2, A3, A4) liegen, und das Kollision-vermeidbar-Signal erzeugen, wenn die Positionsdaten außerhalb der Beurteilungslinie (L00 bis L8) in dem Detektionsbereich (A1, A2, A3, A4) liegen.

3. System nach Anspruch 2, **dadurch gekennzeichnet, dass** mehrere Hindernissensoren (DS1, DS2, DS3, DS4) entlang einer Breite des Fahrzeugs in einem Abstand angeordnet sind, wobei
die Beurteilungskriterium-Erzeugungsmittel (43) die Beurteilungslinie (L00 bis L8) bereitstellen, die den Detektionsbereich (A1, A2, A3, A4) schneidet, der von mindestens einem der Hindernissensoren (DS1, DS2, DS3, DS4) definiert wird, und
die Kollisionsbewertungsmittel (44) das Kollision-erwartet-Signal erzeugen, wenn die Positionsdaten von einem der Hindernissensoren (DS1, DS2, DS3, DS4) innerhalb der Beurteilungslinie (L00 bis L8) und in dem Detektionsbereich (A1, A2, A3, A4) des entsprechenden Hindernissensors (DS1, DS2, DS3, DS4) liegen, und das Kollision-vermeidbar-Signal erzeugen, wenn die Positionsdaten von einem der Hindernissensoren (DS1, DS2, DS3, DS4) außerhalb der Beurteilungslinie (L00 bis L8) und in dem Detektionsbereich (A1, A2, A3, A4) des entsprechenden Hindernissensors (DS1, DS2, DS3, DS4) liegen.

4. System nach Anspruch 2 oder 3, **dadurch gekennzeichnet, dass** die Beurteilungskriterium-Erzeugungsmittel (43) ein Paar Beurteilungslinien (L0; L00) bereitstellen, die auf beiden Seiten des Fahrzeugs verlaufen, wenn der Lenkungswinkel innerhalb eines kleinen Winkels liegt, der angibt, dass das Fahrzeug geradeaus fährt.

5. System nach Anspruch 2, 3 oder 4, **dadurch gekennzeichnet, dass** die Beurteilungskriterium-Erzeugungsmittel (43) ein Paar Beurteilungslinien (L00 bis L8) bereitstellen, wobei die eine außerhalb der Kurve verläuft und die andere innerhalb der Kurve verläuft, wenn der Lenkungswinkel größer als ein vorgegebener großer Winkel ist, der angibt, dass das Fahrzeug wendet.

6. System nach Anspruch 3, **dadurch gekennzeichnet, dass** die Hindernissensoren (DS1, DS2, DS3, DS4) symmetrisch in Bezug auf eine mittlere Längsachse des Fahrzeugs angeordnet sind.

7. System nach Anspruch 6, **dadurch gekennzeichnet, dass** vier Hindernissensoren (DS1, DS2, DS3, DS4) so angeordnet sind, dass sich zwei der Hindernissensoren (DS1, DS4) an den Ecken der Breitseite befinden.

8. System nach Anspruch 7, **dadurch gekennzeichnet, dass** die Kollisionsbewertungsmittel (44) Zeitliche-Abfolge-Daten der Positionsdaten von jedem der Hindernissensoren (DS1, DS4), die an den Ecken der Breitseite angeordnet sind, analysieren, um zu ermitteln, ob sich das Hindernis dem Fahrzeug von Punkt zu Punkt außerhalb der Beurteilungslinie (L00 bis L8) nähert oder nicht, und das Kollision-erwartet-Signal erzeugen, wenn ermittelt wird, dass sich das Hindernis in dieser Weise nähert.

9. System nach Anspruch 2, **dadurch gekennzeichnet, dass** die Kollisionsbewertungsmittel (44) einen Winkeldetektions-Ausfallzustand feststellen, wenn die Positionsdaten nur mit Abstandsdaten und nicht mit Winkeldaten verbunden sind, und das Kollision-erwartet-Signal erzeugen, wenn beim Feststellen des Winkeldetektions-Ausfallzustands die Abstandsdaten kleiner als ein vorgegebener Schwellenabstand sind.

10. System nach Anspruch 3, **dadurch gekennzeichnet, dass** die Kollisionsbewertungsmittel (44) einen Winkeldetektions-Ausfallzustand feststellen, wenn die Positionsdaten nur mit Abstandsdaten und nicht mit Winkeldaten verbunden sind, und das Kollision-erwartet-Signal erzeugen, wenn beim Feststellen des Winkeldetektions-Ausfallzustands die Abstandsdaten kleiner als ein vorgegebener Schwellenabstand sind, wobei der Schwellenabstand mit verschiedenen Werten verschiedenen der Hindernissensoren (DS1, DS2, DS3, DS4) in einem vorgegebenen Muster zugewiesen wird, das von dem Lenkungswinkel bestimmt wird.

11. System nach Anspruch 2, **dadurch gekennzeichnet, dass** die Kollisionsbewertungsmittel (44) Zeitliche-Abfolge-Daten der Positionsdaten von den Hindernissensoren (DS1, DS2, DS3, DS4) analysieren und einen Winkel-unbestimmt-Zustand feststellen, wenn die Zeitliche-Abfolge-Daten angeben, dass eine Änderung des detektierten Winkels größer als ein vorgegebener Wert ist,
wobei
die Kollisionsbewertungsmittel (44) die Abstandsdaten von dem Hindernissensor (DS1, DS2, DS3, DS4) ableiten, der den Winkel-unbestimmt-Zustand verursacht hat, und das Kollision-erwartet-Signal erzeugen, wenn die Abstandsdaten kleiner als ein vorgegebener Schwellenabstand sind, und
der Schwellenabstand mit verschiedenen Werten verschiedenen der Hindernissensoren (DS1, DS2, DS3, DS4) in einem vorgegebenen Muster zugewiesen wird, das von dem Lenkungswinkel bestimmt wird.

12. System nach Anspruch 3, **dadurch gekennzeichnet, dass** die Kollisionsbewertungsmittel (44) Zeitliche-Abfolge-Daten der Positionsdaten von den Hindernissensoren (DS1, DS2, DS3, DS4) analysieren und einen Winkel-unbestimmt-Zustand feststellen, wenn die Zeitliche-Abfolge-Daten angeben, dass eine Änderung des detektierten Winkels größer als ein vorgegebener Wert ist,
wobei
die Kollisionsbewertungsmittel (44) die Abstandsdaten von dem Hindernissensor (DS1, DS2, DS3, DS4) ableiten, der den Winkel-unbestimmt-Zustand verursacht hat, und das Kollision-erwartet-Signal erzeugen, wenn die Abstandsdaten kleiner als ein vorgegebener Schwellenabstand sind, und
der Schwellenabstand mit verschiedenen Werten verschiedenen der Hindernissensoren (DS1, DS2, DS3, DS4) in einem vorgegebenen Muster zugewiesen wird, das von dem Lenkungswinkel bestimmt wird.

13. System nach einem der Ansprüche 9 bis 12, **dadurch gekennzeichnet, dass** die Kollisionsbewertungsmittel (44) das Kollision-vermeidbar-Signal erzeugen, wenn die Abstandsdaten größer als der Schwellenabstand innerhalb eines Radius sind, der einen der Detektionsbereiche (A1, A2, A3, A4) definiert.

14. System nach Anspruch 2 oder 3, **dadurch gekennzeichnet, dass** die Beurteilungskriterium-Erzeugungsmittel (43) eine Anzahl von strengen Koordinatenwerten erzeugen, die eine Strenge-Beurteilungs-Linie (L00, L1, L2, L5, L7) verfolgen, die im Großen und Ganzen parallel zu der Beurteilungslinie (L0, L2, L4, L6, L8) verläuft und nach außen einen Abstand von dem Fahrzeug hat,
wobei die Kollisionsbewertungsmittel (44) das Kollision-erwartet-Signal erzeugen, wenn die Positionsdaten von einem der Hindernissensoren (DS1, DS2, DS3, DS4) innerhalb der Strenge-Beurteilungs-Linie (L00, L1, L3, L5, L7) liegen, sobald das Kollision-erwartet-Signal für die Beurteilungslinie (L0, L2, L4, L6, L8) erzeugt worden ist.

15. System nach Anspruch 2 oder 3, **dadurch gekennzeichnet, dass**
jeder der Hindernissensoren (DS1, DS2, DS3, DS4) einen Nahbereich und einen Fembereich in einem effektiven Detektionsbereich definiert, der für den Hindernissensor (DS1, DS2, DS3, DS4) festgelegt worden ist, und
die Kollisionsbewertungsmittel (44) einen Nah-an-dem-Hindernis-Zustand feststellen, wenn die Positionsdaten von einem der Hindernissensoren (DS1, DS2, DS3, DS4) in den Nahbereich fallen,
wobei die Kollisionsbewertungsmittel (44) nach der Quittierung des Nah-an-dem-Hindernis-Zustands die Warnmittel (50) die Warnmeldung ausgeben lassen.

16. System nach Anspruch 2 oder 3, **dadurch gekennzeichnet, dass**

mindestens ein Hindernissensor (DS1, DS2, DS3, DS4) an dem hinteren Teil des Fahrzeugs angeordnet ist und zwei weitere Hindernissensoren (DS5, DS6) entsprechend an den Ecken des vorderen Teils des Fahrzeugs angeordnet sind, wobei die weiteren Hindernissensoren (DS5, DS6) einen Detektionsbereich haben und Positionsdaten des Hindernisses liefern,

die Beurteilungskriterium-Erzeugungsmittel (43) eine Gruppe von weiteren Koordinatenwerten bereitstellen, die sich entsprechend dem Lenkungswinkel ändern, um in der zweidimensionalen Koordinatenebene eine weitere Beurteilungslinie (R0, R8) zu verfolgen, die außerhalb eines Fahrwegs verläuft, den die Ecke an dem vorderen Teil des Fahrzeugs verfolgt, wenn es rückwärts fährt, und

die Kollisionsbewertungsmittel (44) nach der Quittierung des Ausgangssignals von dem Richtungsdetektor (20), dass das Fahrzeug rückwärts fährt, das Kollision-erwartet-Signal erzeugen, wenn die Positionsdaten von einem der weiteren Hindernissensoren (DS5, DS6) innerhalb der weiteren Beurteilungslinie (R0, R8) in dem entsprechenden Detektionsbereich liegen, und das Kollision-vermeidbar-Signal erzeugen, wenn die Positionsdaten von jedem der weiteren Hindernissensoren (DS5, DS6) außerhalb der weiteren Beurteilungslinie (R0, R8) liegen, und wenn gleichzeitig die Positionsdaten von einem der weiteren Hindernissensoren (DS5, DS6) in dem Detektionsbereich liegen, der für den zugehörigen weiteren Hindernissensor (DS5, DS6) festgelegt worden ist.

17. System nach Anspruch 2 oder 3, **dadurch gekennzeichnet, dass** die Kollisionsbewertungsmittel (44) ein Nicht-Detektions-Signal erzeugen, wenn die Positionsdaten des Hindernisses außerhalb des Detektionsbereichs (A1, A2, A3, A4) liegen, wobei die Kollisionsbewertungsmittel (44) einen Speicher zum Speichern einer begrenzten Anzahl von Zeitliche-Abfolge-Daten von vorhergehenden und aktuellen Beurteilungsergebnissen, die das Kollision-erwartet-Signal, das Kollision-vermeidbar-Signal und das Nicht-Detektions-Signal betreffen, sowie zum Speichern einer begrenzten Anzahl von zeitlichen Abfolgen von vorhergehenden und aktuellen Abstandsdaten haben, die jeweils mit den Beurteilungsergebnissen assoziiert sind,

wobei die Kollisionsbewertungsmittel (44) das aktuelle Beurteilungsergebnis durch Referenzieren der vorhergehenden Beurteilungsergebnisse und der Abstandsdaten analysieren, um verschiedene Modi zum Validieren oder Korrigieren des aktuellen Beurteilungsergebnisses zu erhalten, und das aktuelle Beurteilungsergebnis als validiertes Ergebnis aktualisieren und es in dem Speicher speichern, wobei die verschiedenen Modi die folgenden Modi umfassen:

einen ersten Modus zum Validieren des aktuellen Beurteilungsergebnisses als ein richtiges Ergebnis, wenn das aktuelle Beurteilungsergebnis mit allen vorhergehenden Beurteilungsergebnissen identisch ist, die in dem Speicher gespeichert sind;
einen zweiten Modus zum Korrigieren des aktuellen Beurteilungsergebnisses auf das Kollision-erwartet-Signal, wenn alle folgenden Bedingungen erfüllt sind:

1) das aktuelle Beurteilungsergebnis ist das Nicht-Detektions-Signal,
2) die Beurteilungsergebnisse desselben Signals setzen nicht einen ersten vorgegebenen Zählwert fort,
3) die Abstandsdaten, die kleiner als ein erster vorgegebener Abstand oder gleich diesem sind, erscheinen fortlaufend in einem zweiten Zählwert, und
4) die aktuellen Abstandsdaten sind kleiner als ein zweiter vorgegebener Abstand;

einen dritten Modus zum Korrigieren des aktuellen Beurteilungsergebnisses auf das Kollision-vermeidbar-Signal, wenn alle folgenden Bedingungen erfüllt sind:

1) das aktuelle Beurteilungsergebnis ist das Nicht-Detektions-Signal,
2) die Beurteilungsergebnisse desselben Signals setzen nicht den ersten vorgegebenen Zählwert fort,
3) die Abstandsdaten, die kleiner als der erste vorgegebene Abstand oder gleich diesem sind, erscheinen fortlaufend in dem zweiten Zählwert, und
4) die aktuellen Abstandsdaten sind größer als der zweite vorgegebene Abstand;

einen vierten Modus zum Validieren des aktuellen Beurteilungsergebnisses als das Nicht-Detektions-Signal, wenn alle folgenden Bedingungen erfüllt sind:

1) das aktuelle Beurteilungsergebnis ist das Nicht-Detektions-Signal,
2) die Beurteilungsergebnisse desselben Signals setzen nicht den ersten vorgegebenen Zählwert fort, und
3) die Abstandsdaten, die kleiner als der erste vorgegebene Abstand oder gleich diesem sind, erscheinen nicht fortlaufend in dem zweiten Zählwert; und

einen fünften Modus zum Validieren des aktuellen Beurteilungsergebnisses als richtig, wenn alle folgenden Bedingungen erfüllt sind:

  1) das aktuelle Beurteilungsergebnis ist nicht das Nicht-Detektions-Signal und
  2) keines der gespeicherten Beurteilungsergebnisse ist mit einem anderen identisch.

18. System nach Anspruch 1, **dadurch gekennzeichnet, dass** die Warnmittel (50) eine visuelle Anzeige zum Mitteilen einer Lenkrichtung zum Vermeiden der Kollision bereitstellen, wenn das Kollision-vermeidbar-Signal von den Kollisionsbewertungsmitteln (44) ausgegeben wird.

19. System nach Anspruch 1 oder 18, **dadurch gekennzeichnet, dass** die Warnmittel (50) eine visuelle Anzeige zum Mitteilen eines empfohlenen minimalen Lenkungswinkels, mit dem das Fahrzeug die Kollision mit dem detektierten Objekt vermeiden kann, bereitstellen, wenn das Kollision-vermeidbar-Signal von den Kollisionsbewertungsmitteln (44) ausgegeben wird.

20. System nach einem der Ansprüche 1 bis 3, **dadurch gekennzeichnet, dass** die Kollisionsbewertungsmittel (44) ein Startsignal erzeugen, wenn die Positionsdaten von einem der Hindernissensoren (DS1, DS2, DS3, DS4) zum ersten Mal einen vorgegebenen Abstand von dem Fahrzeug erreichen,
wobei die Warnmittel (50) in Reaktion auf das Startsignal hörbare Informationen bereitstellen, die mitteilen, dass das System zum Bereitstellen der Warnmeldung bereit wird.

21. System nach Anspruch 1, **dadurch gekennzeichnet, dass** die Beurteilungskriterium-Erzeugungsmittel (43) eine Gruppe von Koordinatenwerten in einer zweidimensionalen Koordinatenebene bereitstellen, die im Großen und Ganzen horizontal um das Fahrzeug verläuft, wobei sich die Koordinatenwerte entsprechend den Lenkungswinkeln ändern, um in der zweidimensionalen Koordinatenebene mindestens eine Beurteilungslinie (L00 bis L8) zu verfolgen, die im Großen und Ganzen parallel zu dem geplanten Fahrtweg und in einem vorgegebenen Abstand davon verläuft, wobei
die Beurteilungskriterium-Erzeugungsmittel (43) das Beurteilungskriterium als ein Kriterium bereitstellen, das einen ersten Radius, der den Detektionsbereich definiert, und einen zweiten Radius beinhaltet, der einen Detektionsbereich definiert, der die Beurteilungslinie (L00 bis L8) in dem mindestens einen Detektionsbereich berührt, und
die Kollisionsbewertungsmittel (44) das Kollision-erwartet-Signal erzeugen, wenn die Abstandsdaten von dem mindestens einem Hindernissensor (DS1, DS2, DS3, DS4) innerhalb des zweiten Radius liegen, und das Kollision-erwartet-Signal erzeugen, wenn die Abstandsdaten von dem mindestens einen Hindernissensor (DS1, DS2, DS3, DS4) größer als der zweite Radius sind, aber innerhalb des ersten Radius liegen.

22. System nach Anspruch 21, **dadurch gekennzeichnet, dass** eine Vielzahl der Hindernissensoren (DS1, DS2, DS3, DS4) entlang einer Breite des Fahrzeugs mit Abstand angeordnet ist,
wobei
die Beurteilungskriterium-Erzeugungsmittel (43) die Beurteilungslinie (L00 bis L8) bereitstellen, die den Detektionsbereich (A1, A2, A3, A4) schneidet, der von mindestens einem der Hindernissensoren (DS1, DS2, DS3, DS4) definiert wird, und
die Kollisionsbewertungsmittel (44) das Kollision-erwartet-Signal erzeugen, wenn die Abstandsdaten von dem mindestens einem Hindernissensor (DS1, DS2, DS3, DS4) innerhalb des zweiten Radius liegen, und das Kollision-vermeidbar-Signal erzeugen, wenn die Abstandsdaten von jedem Hindernissensor (DS1, DS2, DS3, DS4) größer als der zweite Radius sind und gleichzeitig die Abstandsdaten von einem der Hindernissensoren (DS1, DS2, DS3, DS4) innerhalb des ersten Radius liegen.

23. System nach Anspruch 22, **dadurch gekennzeichnet, dass** die Beurteilungskriterium-Erzeugungsmittel (43) den zweiten Radius gleich dem ersten Radius für den Detektionsbereich machen, der zu einem oder mehreren der Hindernissensoren (DS1, DS2, DS3, DS4) gehört und den die Beurteilungslinie (L00 bis L8) nicht schneidet.

24. System nach Anspruch 21, **dadurch gekennzeichnet, dass** die Kollisionsbewertungsmittel (44) das Kollision-erwartet-Signal erzeugen, wenn der Abstand, der von einem der Hindernissensoren (DS1, DS2, DS3, DS4) detektiert wird, der an die Innenseite der Kurve angrenzt, kleiner als ein vorgegebener Abstand ist.

25. System nach Anspruch 3 oder 22, **dadurch gekennzeichnet, dass** die Kollisionsbewertungsmittel (44) die Daten zunächst von dem Hindernissensor (DS1, DS2, DS3, DS4), der der Innenseite der Kurve des Fahrzeugs am nächsten liegt, und dann von dem Hindernissensor (DS1, DS2, DS3, DS4) prüft, der näher an der Außenseite der Kurve liegt.

**Revendications**

1. Système d'alarme et de détection d'obstacles pour un véhicule équipé de roues, ledit système comportant :

au moins un détecteur d'obstacles (DS1, DS2, DS3, DS4) adapté pour être localisé à l'extrémité avant ou arrière dudit véhicule, ledit détecteur d'obstacles (DS1, DS2, DS3, DS4) ayant une zone de détection (A1, A2, A3, A4) d'angle de détection limité dans lequel un objet situé à proximité adjacente dudit véhicule peut être détecté, ledit détecteur d'obstacles (DS1, DS2, DS3, DS4) fournissant au moins des données de distance indicatives d'une distance jusqu'à l'obstacle détecté,

un détecteur de direction (20) lequel détecte une direction de déplacement dudit véhicule,

un détecteur de braquage (30) lequel surveille un angle de braquage dudit véhicule,

des moyens d'alarme (50) lesquels émettent un message d'alarme informant d'une influence attendue de l'obstacle détecté sur ledit véhicule,

dans lequel

ledit système inclut des moyens de génération de critère de détermination (43) lesquels analysent ladite direction de déplacement et ledit angle de braquage pour déterminer un trajet de déplacement prévu suivi par ledit véhicule et pour délivrer un critère de détermination spécifique audit trajet de déplacement déterminé et variant avec la variation de l'angle de braquage,

ledit système inclut des moyens d'évaluation de collision (44) lesquels génèrent un signal de collision attendue lorsque lesdites données de distance satisfont audit critère de détermination dans ladite zone de détection (A1, A2, A3, A4), génèrent un signal d'évitement de collision lorsque lesdites données de distance ne satisfont pas audit critère de détermination dans ladite zone de détection (A1, A2, A3, A4), et

lesdits moyens d'alarme (50) émettent ledit message d'alarme indicatif d'une condition attendue de collision et d'une condition d'évitement de collision respectivement en réponse audit signal de collision attendue et audit signal d'évitement de collision, **caractérisé en ce que**

lesdits moyens de génération de critère de détermination (43) sont adaptés pour fournir ledit critère de détermination concernant une ligne de détermination (L00 à L8) espacée vers l'extérieur d'une marge prédéterminée depuis un trajet de déplacement qu'une extrémité de largeur du véhicule est censée suivre, ladite ligne de détermination (L00 à L8) et ladite marge prédéterminée variant avec la variation de l'angle de braquage.

2. Système comme défini dans la revendication 1, dans lequel

ledit détecteur d'obstacles (DS1, DS2, DS3, DS4) est configuré sous forme d'un détecteur bidimensionnel lequel délivre des données de position incluant une direction vers l'obstacle détecté, lesdits moyens de génération de critère de détermination (43) fournissant ledit critère de détermination qui est défini par un ensemble de premières valeurs de coordonnées dans un plan de coordonnées bidimensionnel s'étendant généralement horizontalement autour dudit véhicule, lesdites premières valeurs de coordonnées variant conformément aux angles de braquage pour tracer, dans ledit plan de coordonnées bidimensionnel, au moins une ligne de détermination (L00 à L8) qui est généralement parallèle audit trajet de déplacement prévu et espacée d'une marge prédéterminée par rapport à celui ci,

lesdits moyens d'évaluation de collision (44) générant ledit signal de collision attendue lorsque les données de position sont à l'intérieur de ladite ligne de détermination (L00 à L8) dans ladite zone de détection (A1, A2, A3, A4), et générant ledit signal d'évitement de collision lorsque les données de position sont à l'extérieur de ladite ligne de détermination (L00 à L8) dans ladite zone de détection (A1, A2, A3, A4).

3. Système comme défini dans la revendication 2, dans lequel

une pluralité desdites détecteurs d'obstacles (DS1, DS2, DS3, DS4) sont espacés le long d'une largeur dudit véhicule, lesdits moyens de génération de critère de détermination (43) fournissant ladite ligne de détermination (L00 à L8) laquelle coupe ladite ligne zone de détection (A1, A2, A3, A4) définie par au moins l'un desdits détecteurs d'obstacles (DS1, DS2, DS3, DS4),

lesdits moyens d'évaluation de collision (44) générant ledit signal de collision attendue lorsque les données de position en provenance de l'un quelconque desdits détecteurs d'obstacles (DS1, DS2, DS3, DS4) sont comprises à l'intérieur de ladite ligne de détermination (L00 à L8) et dans la zone de détection (A1, A2, A3, A4) du détecteur d'obstacles (DS1, DS2, DS3, DS4) correspondant, et générant ledit signal d'évitement de collision lorsque les données de position en provenance de l'un quelconques desdits détecteurs d'obstacles (DS1, DS2, DS3, DS4) sont comprises à l'extérieur de ladite ligne de détermination (L00 à L8) et dans la zone de détection (A1, A2, A3, A4) du détecteur d'obstacles (DS1, DS2, DS3, DS4) correspondant.

4. Système comme défini dans la revendication 2 ou 3, dans lequel lesdits moyens de génération de critère de détermination (43) fournissent une paire desdites lignes de détermination (L0 ; L00) courant sur les deux côtés dudit véhicule lorsque ledit angle de braquage est compris dans un petit angle indiquant que ledit véhicule se déplace en ligne droite.

5. Système comme défini dans la revendication 2,3 ou 4, dans lequel
lesdits moyens de génération de critère de détermination (43) fournissent une paire desdites lignes de détermination (L00 à L8), l'une s'étendant à l'extérieur du virage est l'autre s'étendant à l'intérieur du virage lorsque ledit angle de braquage dépasse un grand angle prédéterminé indiquant que ledit véhicule tourne.

6. Système comme défini dans la revendication 3, dans lequel
lesdits détecteurs d'obstacles (DS1, DS2, DS3, DS4) sont disposés symétriquement par rapport à un axe longitudinal central dudit véhicule.

7. Système comme défini la revendication 6, dans lequel
quatre desdits détecteurs d'obstacles (DS1, DS2, DS3, DS4) sont disposés avec deux desdits détecteurs d'obstacles (DS1, DS4) localisés au niveau des coins d'extrémité de largeur, respectivement.

8. Système comme défini la revendication 7, dans lequel
lesdits moyens d'évaluation de collision (44) analysent des données de séries temporelles desdites données de position en provenance de chacun desdits détecteurs d'obstacles (DS1, DS4) localisés au niveau des coins d'extrémité de largeur afin de déterminer si oui ou non l'obstacle s'approche du véhicule relativement en direction du véhicule point à point à l'extérieur de ladite ligne de détermination (L00 à L8), et génèrent ledit signal de collision attendue lorsque l'obstacle est déterminé comme approchant.

9. Système comme défini dans la revendication 2, dans lequel
lesdits moyens d'évaluation de collision (44) déterminent une condition d'échec de détection d'angle lorsque lesdites données de position sont accompagnées uniquement de données de distance et non pas de données d'angle, et génèrent ledit signal de collision attendue lorsque lesdites données de distance sont plus courtes qu'une distance de seuil prédéterminée lors de la détermination de ladite condition d'échec de détection d'angle.

10. Système comme défini la revendication 3, dans lequel
lesdits moyens d'évaluation de collision (44) déterminent une condition d'échec de détection d'angle lorsque les données de position sont accompagnées uniquement de données de distance et non pas de données d'angle, et génèrent ledit signal de collision attendue lorsque lesdites données de distance sont plus courtes qu'une distance de seuil prédéterminée lors de la détermination de ladite condition d'échec de détection d'angle,
ladite distance de seuil de différentes valeurs étant attribuée à différents détecteurs parmi lesdits détecteurs d'obstacles (DS1, DS2, DS3, DS4) dans un modèle prédéterminé déterminé par l'angle de braquage.

11. Système comme défini dans la revendication 2, dans lequel
lesdits moyens d'évaluation de collision (44) analysent des données de séries temporelles desdites données de position en provenance dudit détecteur d'obstacles (DS1, DS2, DS3, DS4) et déterminent une condition indéfinie d'angle lorsque lesdites données de séries temporelles montrent qu'une variation de l'angle détecté dépasse une valeur prédéterminée,
lesdits moyens d'évaluation de collision (44) dérivant les données de distance du détecteur d'obstacles (DS1, DS2, DS3, DS4) engendrant ladite condition indéfinie d'angle, et générant ledit signal de collision attendue lorsque lesdites données de distance sont plus courtes qu'une distance de seuil prédéterminée,
ladite distance de seuil de différentes valeurs étant attribuée à différents détecteurs parmi les détecteurs d'obstacles (DS1, DS2, DS3, DS4) dans un modèle prédéterminé déterminé par l'angle de braquage.

12. Système comme défini dans la revendication 3, dans lequel
lesdits moyens d'évaluation de collision (44) analysent des données de séries temporelles desdites données de position en provenance desdits détecteurs d'obstacles (DS1, DS2, DS3, DS4) et déterminent une condition indéfinie d'angle lorsque lesdites données de séries temporelles montrent qu'une variation de l'angle détecté dépasse une valeur prédéterminée,
lesdits moyens d'évaluation de collision (44) dérivant les données de distance du détecteur d'obstacles (DS1, DS2, DS3, DS4) engendrant ladite condition indéfinie d'angle, et générant ledit signal de collision attendue lorsque lesdites données de distance sont plus courtes qu'une distance de seuil prédéterminée,
ladite distance de seuil de différentes valeurs étant attribuée auxdits différents détecteurs d'obstacles (DS1, DS2, DS3, DS4) dans un modèle prédéterminé déterminé par l'angle de braquage.

13. Système comme défini dans l'une quelconque des revendications 9 à 12, dans lequel
lesdits moyens d'évaluation de collision (44) génèrent ledit signal d'évitement de collision lorsque lesdites données de distance dépassent ladite distance de seuil dans un rayon définissant l'une quelconque desdites zones de détection (A1, A2, A3, A4).

14. Système comme défini dans revendication 2 ou 3, dans lequel
lesdits moyens de génération de critère de détermination (43) délivrent un certain nombre de valeurs de coordonnées strictes qui tracent une ligne de détermination stricte (L00, L1, L2, L5, L7) généralement parallèle à ladite ligne de détermination (L0, L2, L4, L6, L8) et espacée vers l'extérieur de celle-ci par rapport au véhicule,
lesdits moyens d'évaluation de collision (44) générant ledit signal de collision attendue lorsque lesdites données de position en provenance de l'un quelconque desdits détecteurs d'obstacles (DS1, DS2, DS3, DS4) sont comprises à l'intérieur de ladite ligne de détermination stricte (L00, L1, L3, L5, L7) une fois que ledit signal de collision attendue est généré en référence à ladite ligne de détermination (L0, L2, L4, L6, L8).

15. Système comme défini dans la revendication 2 ou 3, dans lequel
chacun desdits détecteurs d'obstacles (DS1, DS2, DS3, DS4) définit une portée à courte distance et une portée à longue distance dans une zone de détection efficace attribuée audit détecteur d'obstacles (DS1, DS2, DS3, DS4),
lesdits moyens d'évaluation de collision (44) déterminent une condition d'obstacle proche lorsque lesdites données de position en provenance de l'un quelconque desdits détecteurs d'obstacles (DS1, DS2, DS3, DS4) se trouvent dans ladite portée à courte distance,
lesdits moyens d'évaluation de collision (44) autorisant lesdits moyens d'alarme (50) à émettre ledit message d'alarme uniquement lors de l'acquittement de ladite condition d'obstacle proche.

16. Système comme défini la revendication 2 ou 3, dans lequel
ledit au moins un détecteur d'obstacles (DS1, DS2, DS3, DS4) est disposé au niveau de l'extrémité arrière dudit véhicule, et deux détecteurs d'obstacles supplémentaires (DS5, DS6) sont positionnés respectivement au niveau des coins d'extrémité avant dudit véhicule, chacun desdits détecteurs d'obstacles supplémentaires (DS5, DS6) ayant une zone de détection et délivrant des données de position de l'obstacle,
lesdits moyens de génération de critère de détermination (43) fournissant un ensemble de valeurs de coordonnées supplémentaires qui varie conformément à l'angle de braquage à tracer, dans ledit plan de coordonnées bidimensionnel, une ligne de détermination (R0 à R8) supplémentaire qui se trouve à l'extérieur d'un trajet de déplacement que le coin d'extrémité avant dudit véhicule trac dans son déplacement inverse,
lesdits moyens d'évaluation de collision (44), lors de l'acquittement de la sortie dudit détecteur de direction (20) indiquant que ledit véhicule fait marche arrière, génèrent ledit signal de collision attendue lorsque les données de position en provenance de l'un quelconques desdits détecteurs d'obstacles (DS5, DS6) supplémentaires sont comprises à l'intérieur de ladite ligne de détermination (R0, R8) supplémentaire dans la zone de détection correspondante, et générant ledit signal d'évitement de collision lorsque les données position en provenance de chacun desdits détecteurs d'obstacles (DS5, DS6) supplémentaires sont comprises à l'extérieur de ladite ligne de détermination (R0, R8) supplémentaire et au même moment lorsque les données de position en provenance de l'un quelconque desdits détecteurs d'obstacles (DS5, DS6) supplémentaires sont comprises dans la zone de détection attribuée au détecteur d'obstacles supplémentaire (DS5, DS6) associé.

17. Système comme défini la revendication 2 ou 3 dans lequel
lesdits moyens d'évaluation de collision (44) génèrent un signal de non détection lorsque lesdites données de position de l'obstacle sont comprises à l'extérieur de ladite zone de détection (A1, A2, A3, A4), lesdits moyens d'évaluation de collision (44) ayant une mémoire pour mémoriser un nombre limité de données de séries temporelles de résultats de détermination courant et précédent concernant ledit signal de collision attendue, ledit signal d'évitement de collision, et ledit signal de non détection, ainsi que pour mémoriser un nombre limité de séries temporelles de données de distance précédente et courante respectivement associées auxdits résultats de détermination,
lesdits moyens d'évaluation de collision (44) analysant le résultat de détermination courant en référence auxdits résultats de détermination précédents et auxdites données de distance afin de délivrer différents modes pour valider ou corriger ledit résultat de détermination courant et mettre à jour ledit résultat de détermination courant en tant que résultat validé et mémoriser celui-ci dans ladite mémoire,
lesdits différents modes incluant :

un premier mode pour valider ledit résultat de détermination courant en tant que résultat correct lorsque ledit résultat de détermination courant est identique à tous les résultats de détermination précédents mémorisés dans ladite mémoire,

un deuxième mode pour corriger ledit résultat de détermination courant dans ledit signal de collision attendue lorsque toutes les conditions suivantes sont satisfaites :

1) ledit résultat de détermination courant est ledit signal de non détection,
2) des résultats de détermination du même signal ne continuent pas un premier compte prédéterminé,
3) lesdites données de distance inférieures ou égales à une première distance prédéterminée surviennent consécutivement à un second compte, et
4) lesdites données de distance courantes sont plus courtes qu'une seconde distance prédéterminée,

un troisième mode pour corriger ledit résultat de détermination courant dans ledit signal d'évitement de collision lorsque toutes les conditions suivantes sont satisfaites :

1) ledit résultat de détermination courant est ledit signal de non détection,
2) des résultats de détermination du même signal ne continuent pas dans ledit premier compte prédéterminé,
3) lesdites données de distance inférieures ou égales à ladite première distance prédéterminée surviennent consécutivement audit second compte, et
4) lesdites données de distance courantes sont plus longues que ladite seconde distance prédéterminée,

un quatrième mode pour valider ledit résultat de détermination courant en tant que ledit signal de non détection lorsque toutes les conditions suivantes sont satisfaites :

1) ledit résultat de détermination courant est ledit signal de non détection,
2) des résultats de détermination du même signal ne continuent pas dans un premier compte prédéterminé, et
3) lesdites données de distance inférieures ou égales à ladite première distance prédéterminée ne surviennent pas consécutivement audit second compte,

un cinquième mode pour valider ledit résultat de détermination courant comme étant un résultat correct lorsque toutes les conditions suivantes sont satisfaites :

1) ledit résultat de détermination courant n'est pas ledit signal de non détection, et
2) tous lesdits résultats de détermination mémorisés ne sont pas identiques entre eux.

**18.** Système comme défini dans la revendication 1, dans lequel
lesdits moyens d'alarme (50) fournissent une indication visuelle pour notifier une direction de braquage afin d'éviter la collision lorsque ledit signal d'évitement de collision est émis en provenance desdits moyens d'évaluation de collision (44).

**19.** Système comme défini dans la revendication 1 ou 18, dans lequel
lesdits moyens d'alarme (50) délivrent une indication visuelle pour notifier un angle de braquage minimum recommandé à l'aide duquel le véhicule peut éviter la collision avec l'objet détecté lorsque ledit signal d'évitement de collision est émis par lesdits moyens d'évaluation de collision (44).

**20.** Système comme défini dans l'une quelconque des revendications 1 à 3, dans lequel
lesdits moyens d'évaluation de collision (44) génèrent un signal de début lorsque les données de position en provenance de l'un quelconque desdits détecteurs d'obstacles (DS1, DS2, DS3, DS4) atteignent en premier une distance prédéterminée par rapport audit véhicule,
lesdits moyens d'alarme (50) délivrant des informations audibles en réponse audit signal de début, notifiant que ledit système est prêt pour délivrer ledit message d'alarme.

**21.** Système comme défini dans la revendication 1, dans lequel
lesdits moyens de génération de critère de détermination (43) délivrent un ensemble de valeurs de coordonnées dans un plan de coordonnées bidimensionnel s'étendant généralement horizontalement autour dudit véhicule, lesdites valeurs de coordonnées variant conformément aux angles de braquage à tracer, dans ledit plan de coordonnées bidimensionnel, au moins une ligne de détermination (L00 à L8) étant généralement parallèle audit trajet de déplacement et espacée d'une marge prédéterminée de celui-ci,

lesdits moyens de génération de critère de détermination (43) délivrant ledit critère de détermination comme incluant un premier rayon définissant ladite zone de détection et un second rayon définissant une plage de détection qui touche ladite ligne de détermination (L00 à L8) dans ladite au moins une desdites zones de détection,
lesdits moyens d'évaluation de collision (44) générant ledit signal de collision attendue lorsque les données de distance en provenance dudit au moins un détecteur d'obstacles (DS1, DS2, DS3, DS4) sont comprises dans ledit second rayon, et générant ledit signal de collision attendue lorsque lesdites données de distance en provenance dudit au moins un détecteur d'obstacles (DS1, DS2, DS3, DS4) dépassent ledit second rayon mais sont comprises dans ledit premier rayon.

22. Système comme défini dans revendication 21, dans lequel
une pluralité desdits détecteurs d'obstacles (DS1, DS2, DS3, DS4) sont espacés le long d'une largeur dudit véhicule,
lesdits moyens de génération de critère de détermination (43) délivrant ladite ligne de détermination (L00 à L8) laquelle coupe ladite zone de détection (A1, A2, A3, A4) définie par au moins l'un desdits détecteurs d'obstacles (DS1, DS2, DS3, DS4),
lesdits moyens d'évaluation de collision (44) générant ledit signal de collision attendue lorsque les données de distance en provenance dudit au moins un détecteur d'obstacles (DS1, DS2, DS3, DS4) sont comprises dans ledit second rayon, et générant ledit signal d'évitement de collision lorsque lesdites données de distance en provenance de chacun desdits détecteurs d'obstacles (DS1, DS2, DS3, DS4) dépassent ledit second rayon et qu'au même moment les données de distance en provenance de l'un quelconque des détecteurs d'obstacles (DS1, DS2, DS3, DS4) sont comprises dans ledit premier rayon.

23. Système comme défini la revendication 22, dans lequel
lesdits moyens de génération de critère de détermination (43) amènent ledit second rayon égal audit premier rayon pour ladite plage de détection appartenant à un ou plusieurs desdits détecteurs d'obstacles (DS1, DS2, DS3, DS4) que ladite ligne détermination (L00 à L8) ne coupe pas.

24. Système comme défini dans revendication 21, dans lequel
lesdits moyens d'évaluation de collision (44) génèrent ledit signal de collision attendue lorsque la distance détectée par l'un desdits détecteurs d'obstacles (DS1, DS2, DS3, DS4) adjacents à l'intérieur du virage est inférieure à une distance prédéterminée.

25. Système comme défini dans la revendication 3 ou 22, dans lequel
lesdits moyens d'évaluation de collision (44) examinent en premier les données en provenance du détecteur d'obstacles (DS1, DS2, DS3, DS4) positionné le plus à proximité de l'intérieur du virage et successivement depuis le détecteur d'obstacles (DS1, DS2, DS3, DS4) positionné le plus à proximité de l'extérieur du virage dudit véhicule.

## FIG. 1

## FIG. 2

FIG. 3

FIG. 4

FIG. 5

FIG. 6

*FIG. 7*

```
                    ┌─────────────┐
                    │    START    │
                    └──────┬──────┘
                           │
              ╱────────────────────────╲
            ╱   Right-and-left center    ╲      Yes
          ╱       Sensor DS2 or DS3        ╲────────────────────┐
          ╲      detects some obstacle     ╱                    │
            ╲    inside the judgment line ╱                     │
              ╲       L0,L00            ╱                       │
                ╲──────────┬──────────╱                        │
                           │ No                                │
              ╱────────────────────────╲                       │
            ╱    Right-and-left corner    ╲     Yes             │
          ╱       Sensor DS1 or DS4        ╲───────────────────►│
          ╲      detects some obstacle     ╱                    │
            ╲    inside the judgment line ╱                     │
              ╲       L0,L00            ╱                       │
                ╲──────────┬──────────╱                        │
                           │ No                                │
              ╱────────────────────────╲     Yes               │
            ╱      All the sensors       ╲──────────┐          │
          ╱         do not detect         ╱          │          │
            ╲       an obstacle         ╱            │          │
                ╲──────────┬──────────╱              │          │
                           │ No                      │          │
          ┌────────────────────┐   ┌──────────────┐ ┌─────────────────┐
          │ Collision-avoidable│   │ Non-detection│ │Collision-expected│
          │      signal        │   │    signal    │ │     signal       │
          └─────────┬──────────┘   └──────┬───────┘ └────────┬─────────┘
                    │◄───────────────────┘                   │
                    │◄──────────────────────────────────────┘
                    │
             ┌──────┴──────┐
             │     END     │
             └─────────────┘
```

*FIG. 8A*

*FIG. 8B*

**FIG. 9**

## FIG. 10A

## FIG. 10B

## FIG. 10C

## FIG. 10D

*FIG. 11*

Lx

A1  A2  A3  Lx'

A4

DS1  DS2  DS3  DS4

*FIG. 12A*

HD  52

*FIG. 12B*

M

HD  52

図12C

N  52

SP

図12D

N  52

SP

**FIG. 13**

```
        ( S ) ◄─────────────────────┐
          │                          │
  ┌────────────────┐                 │
  │  Initialization │  S1            │
  │    process      │                │
  └────────────────┘                 │
          │                          │
  ┌────────────────┐                 │
  │  Initial value  │  S2            │
  │ = Non-detection │                │
  │     signal      │                │
  └────────────────┘                 │
          │                          │
        ( A ) ◄──────────────────┐   │
          │                      │   │
  ┌────────────────┐             │   │
  │ Ultrasonic signal│  S3        │   │
  │  sending process │            │   │
  └────────────────┘             │   │
          │                      │   │
  ┌────────────────┐             │   │
  │ Ultrasonic signal│  S4        │   │
  │ receiving process│            │   │
  └────────────────┘             │   │
          │                      │   │
  ┌────────────────┐             │   │
  │   Calculate     │  S5         │   │
  │ polor-cooridinates (r,θ)│     │   │
  └────────────────┘             │   │
          │                      │   │
  ┌────────────────┐             │   │
  │    Convert      │  S6         │   │
  │  (r,θ) → (x,y)  │            │   │
  └────────────────┘             │   │
          │                      │   │
  ┌────────────────┐             │   │
  │      Read       │  S7         │   │
  │  steering angle │            │   │
  └────────────────┘             │   │
          │                      │   │
  ┌────────────────┐             │   │
  │     Select      │  S8         │   │
  │  judgment line  │            │   │
  └────────────────┘             │   │
          │                      │   │
  ┌────────────────┐             │   │
  │ Collision judgment│  S9        │   │
  └────────────────┘             │   │
          │                      │   │
  ┌────────────────┐             │   │
  │ Issue alarm message│ S10       │   │
  │  from Display   │            │   │
  └────────────────┘             │   │
          │                      │   │
  ┌────────────────┐             │   │
  │ Issue alarm message│ S11       │   │
  │  from buzzer    │            │   │
  └────────────────┘             │   │
          │          S12         │   │
  ┌────────────────┐──────► ( P )─┘   │
  │      Read       │                 │
  │position of shift lever│   Wait     │
  └────────────────┘    until except "P"│
          │                           │
  ┌────────────────┐  S13              │
  │   Switching     │                 │
  │process for next sensor│            │
  └────────────────┘                  │
          │                           │
  ┌────────────────┐  S14              │
  │Timing control process│             │
  └────────────────┘                  │
          │                           │
          └───────────────────────────┘
```

FIG. 14A

FIG. 14B

FIG. 14C

44

FIG. 15A

FIG. 15B

FIG. 15C

FIG. 16A

FIG. 16B

## FIG. 17

FIG. 18A

FIG. 18B

FIG. 18C

FIG. 18D

FIG. 18E

FIG. 19

FIG. 20

*FIG. 21A*

*FIG. 21B*

*FIG. 21C*

## FIG. 22

S4

BUZZER 151

STEERING DETECTOR 130

S3

ELECTRONIC CONTROL UNIT 140

DIRECTION DETECTOR 120

DISPLAY 152

S2

S1

## FIG. 23

ALARM UNIT 150

DISPLAY 152    BUZZER 151

140

SENSOR DS1

SENSOR DS2

ULTRASONIC TRANSCEIVER UNIT 141

DISTANCE CALCULATION UNIT 142

SENSOR DS3

COLLISION-EVALUATING UNIT 144

JUDGMENT CRITERION GENERATING UNIT 143

SENSOR DS4

DIRECTION DETECTOR 120

STEERING DETECTOR 130

FIG. 24

*FIG. 25*

```
                    ┌─────────┐
                    │  START  │
                    └────┬────┘
                         │
             ╱─────────────────────╲
            ╱  Right-and-left center  ╲        Yes
           ╱     Sensor S2 or S3       ╲───────────────┐
           ╲   detects some obstacle   ╱                │
            ╲      within 100cm       ╱                 │
             ╲─────────────────────╱                    │
                         │ No                            │
                         │                               │
             ╱─────────────────────╲                     │
            ╱  Right-and-left corner  ╲       Yes         │
           ╱     Sensor S1 or S4       ╲──────────────────┤
           ╲   detects some obstacle   ╱                  │
            ╲      within 32cm        ╱                    │
             ╲─────────────────────╱                      │
                         │ No                              │
                         │                                 │
             ╱─────────────────╲                           │
            ╱   All the sensors  ╲       Yes                │
           ╱    do not detect     ╲────────────┐           │
           ╲     an obstacle       ╱            │           │
            ╲─────────────────────╱             │           │
                         │ No                    │           │
          ┌──────────────────┐   ┌──────────────┐  ┌──────────────────┐
          │ Collision-avoidable│  │ Non-detection│  │ Collision-expected│
          │      signal        │  │    signal    │  │      signal       │
          └─────────┬──────────┘  └──────┬───────┘  └─────────┬─────────┘
                    │◄──────────────────┘                     │
                    │◄───────────────────────────────────────┘
                ┌───┴────┐
                │  END   │
                └────────┘
```

FIG. 26A

FIG. 26B

**FIG. 27**

START

Right corner
Sensor S4
detects some obstacle
within 100cm — Yes →

No

Right-and-left center
Sensor S2 or S3
detects some obstacle
within 100cm — Yes →

Left corner
Sensor S1
detects some obstacle
within 25cm — Yes →

No

All the sensors
do not detect
an obstacle — Yes →

No

Collision-avoidable
signal

Non-detection
signal

Collision-expected
signal

END

56

## FIG. 28A

## FIG. 28B

FIG. 29

```
                    ┌──────────┐
                    │  START   │
                    └────┬─────┘
                         │
              ╱──────────┴──────────╲
             ╱     Right corner      ╲        Yes
            ╱       Sensor S4         ╲──────────────────────────┐
            ╲   detects some obstacle ╱                          │
             ╲      witihin 100cm    ╱                           │
              ╲──────────┬──────────╱                            │
                         │ No                                    │
              ╱──────────┴──────────╲                            │
             ╱     Right center      ╲        Yes                │
            ╱       Sensor S3         ╲──────────────────────────┤
            ╲   detects some obstacle ╱                          │
             ╲      within 100cm     ╱                           │
              ╲──────────┬──────────╱                            │
                         │ No                                    │
              ╱──────────┴──────────╲                            │
             ╱      Left center      ╲        Yes                │
            ╱       Sensor S2         ╲──────────────────────────┤
            ╲   detects some obstacle ╱                          │
             ╲      within 63cm      ╱                           │
              ╲──────────┬──────────╱                            │
                         │ No                                    │
              ╱──────────┴──────────╲                            │
             ╱      Left corner      ╲        Yes                │
            ╱       Sensor S1         ╲──────────────────────────┤
            ╲   detects some obstacle ╱                          │
             ╲      within 25cm      ╱                           │
              ╲──────────┬──────────╱                            │
                         │ No                                    │
              ╱──────────┴──────────╲                            │
             ╱    All the sensors    ╲   Yes                     │
            ╱      do not detect      ╲──────────┐               │
            ╲      an obstacle        ╱          │               │
             ╲──────────┬───────────╱           │               │
                        │ No                     │               │
         ┌──────────────┴──┐  ┌────────────────┐  ┌──────────────────┐
         │ Collision-avoidable│  │ Non-detection │  │ Collision-expected│
         │      signal      │  │    signal     │  │      signal      │
         └──────┬──────────┘  └───────┬───────┘  └────────┬─────────┘
                │                      │                    │
                │◄─────────────────────┘                    │
                │◄──────────────────────────────────────────┘
           ┌────┴─────┐
           │   END    │
           └──────────┘
```

## FIG. 30A

## FIG. 30B

## FIG. 30C

59

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5266400 A
- JP 2000339595 A
- JP 2001283389 A
- US 5479173 A